# EUROPEAN PATENT SPECIFICATION

(11) **EP 1 407 162 B1**
(45) Date of publication and mention of the grant of the patent: **13.04.2005**
(21) Application number: 02749020.0
(22) Date of filing: 15.07.2002
(51) Int. Cl.: F16D 66/00

(54) **ARRANGEMENT AND METHOD FOR REPORTING VEHICLE BRAKE FRICTION LINING CONDITIONS**
EINRICHTUNG UND VERFAHREN ZUR ÜBERMITTELUNG DER BESCHAFFENHEIT EINES BREMSBELAGS EINES FAHRZEUGS
ARRANGEMENT ET PROCEDE POUR LA NOTIFICATION DE FRICTION SUR GARNITURE DE FREIN DE VEHICULE

(30) Priority: 17.07.2001 GB 0117370
(43) Date of publication of application: 14.04.2004
(73) Proprietor: FEDERAL-MOGUL FRICTION PRODUCTS LIMITED, Manchester M22 5TN (GB)
(72) Inventor: LIPSCOMB, Michael, John, Edward, Gateshead NE8 4NR (GB); LAVENDER, Howard, Derbyshire SK17 9NH (GB); HENRY, Brian, David, High Peak, Derbyshire SK23 7NS (GB)
(74) Representative: Hammersley, John
(86) International application number: PCT/GB2002/003235
(87) International publication number: WO 2003/008833

(56) References cited:
- EP-A- 0 594 550
- EP-A- 0 704 639
- WO-A-00/02757
- DE-A- 2 124 359
- DE-A- 19 953 818
- US-A- 4 402 210
- US-A- 4 855 712
- US-A- 5 090 779
- US-B1- 6 222 443

## Description

This invention relates to condition monitoring and reporting arrangements for friction linings of brakes of wheeled vehicles and particularly, but not exclusively, vehicles having a plurality of braked wheel axle sets and formed as a train of wheeled sub-components, such as a tractor locomotive and one or more trailer wagons.

Such vehicle trains are known in both road-going form, wherein the tractor locomotive is steerable by the driver to follow a path along a road, and in rail-going form, wherein the tractor locomotive and trailer wagons are constrained to follow a path defined by a rail track. The invention is particularly applicable to rail-borne vehicles and will herein be generally described in that context. However, and except where the context is clear, it is not intended that this should be a limitation.

The term "wheel axle set" is used in this specification to refer to one or more pair of wheels spaced apart along a common axis of rotation, irrespective of whether or not the wheels are independently suspended or coupled to each other directly by a physical axle, and "braked wheel axle set" is used to refer to a wheel axle set in which a brake system disposes brake friction linings to cooperate with braking surfaces on one or more wheels of the axle set or on an axle extending between, and possibly beyond, the wheels of the set, or on a shaft coupled to a wheel , axle or drive shaft therefor by gearing. Such friction linings may act directly on opposite planar surfaces as a disc brake, or the wheel periphery as a rim or tread brake or within a drum as a drum brake. Each friction lining is usually carried by a backing by which it is held with respect to the brake system and brake actuation forces transmitted, defining a friction pad which is substantially planar for a disc brake or of arcuate block or shoe form for a tread or drum brake. For convenience the term "friction pad" will be used hereinafter for all physical shapes.

Arrangements for monitoring physical and/or operating parameters of vehicle brakes for conditions considered important to safe and economic operation of the vehicle are well known, most frequently taking the form of determining and reporting by way of visible or audible indication when a friction lining has worn to a predetermined level of remaining thickness, but also of a form for determining and indicating when other conditions exist, such as an excessive temperature that is indicative of incorrect operation, for example, the lining being jammed with respect to the rubbing surface.

It is known for a predetermined condition of friction lining thickness to be sensed directly by disposing one or more conductors of electrical or electromagnetic signals (hereinafter referred to simply as "conductors") within or alongside the friction lining to interact with the brake rubbing surface when a predetermined amount of the friction lining remains, such interaction altering the conductive state of a said conductor. The altered state of any said conductor may comprise physical disruption of an erstwhile conductive path by abrasion from the rubbing surface or may comprise completion of a conductive path by way of the rubbing surface. The conductor or conductors extend externally of the friction lining by extended portions thereof and are coupled to a processing and indicating unit disposed elsewhere on the vehicle; if desired, the conductors associated with a plurality of brakes of the vehicle may be coupled together within the vehicle in order to determine and report different levels of friction lining condition information to the vehicle driver.

Whilst it is simple in principle to effect each connection upon installation of an individual friction lining (having effected disconnection of any old lining to be replaced) this may nevertheless represent a considerable time overhead in the work of friction lining replacement as in practice it requires not only the joining of conductive parts but also ensuring that any flexible connecting conductors (also known as flying leads) associated therewith are safely stowed from damage during subsequent vehicle operation. If large numbers are to be installed at any one time, the cumulative time penalty may be considerable.

In commercial vehicles brakes, where braking forces to be applied may be greater or applied over a larger area of friction lining, braking arrangements frequently employ fluid driven actuators disposed remotely of the friction lining itself and connected mechanically thereto by an actuator rod or equivalent, and in such circumstances condition sensing means may alternatively be provided to determine the extent of friction lining wear indirectly by responding to movement of the actuator rod or other mechanical element such as a travel adjuster. Although access to such mechanical element may be better than to a friction lining itself, or a plurality controlled by such element, it may also provide less accuracy and less comprehensive information by virtue of its sensing remoteness.

Notwithstanding the large variety of implementations of such arrangements for monitoring the condition of vehicle brake friction linings, there is an almost universal approach of individually linking signals into a cable loom within the vehicle to processing and/or indicating means for presentation to the vehicle driver in the driving cab. Clearly, if a brake condition exists which makes the vehicle dangerous then it is appropriate for the condition to be reported as a warning to the driver immediately during a joumey. However, in many cases it is possible to sense and report conditions which are of the nature of an early warning, permitting corrective action to be taken by routine maintenance at a later time.

For vehicles which are the total responsibility of the driver and self contained, in terms of motive power, monitoring arrangements and power sources therefor, reporting even non-acute conditions to the driver may be appropriate. However in many instances maintenance of the individual brakes is not the responsibility of the driver but of a specialist department which effects maintenance, including replacement of worn friction linings, at times when the vehicle is not in use. In such circumstances reporting non-acute brake conditions to the driver's cab may be considered inappropriate, and particularly so when prior to said maintenance a vehicle sub-component (such as a trailer wagon) has been separated from the tractor or locomotive in which the driver's cab is situated.

Such a situation is discussed in GB-A-2292429 which describes therein a friction lining wear condition indicator arrangement that is self contained with processing and indication reporting circuitry disposed adjacent a wheel brake arrangement where such maintenance personnel would in any event have to obtain access to make physical inspection. In being self-contained it does not rely upon extensive cabling of the vehicle and/or in the case of a trailer wagon, coupling to a power source of a tractor locomotive. Such an arrangement is appropriate for a high-usage road-going vehicle sub-component which is regularly inspected and has a relatively small number of braked wheel axle sets and associated friction linings.

In general, a railroad train will be expected to comprise a larger number of sub-component wagons than a road-going vehicle but the number of trailer wagons is less relevant than their type. For instance, for passenger - carrying vehicles, the wagons are also often kept together as a set and/or subjected to intensive usage that exposes them to regular maintenance checks, and prior art arrangements described principally for road-going vehicles may be practicable for such railroad trains with only minor adaptation.

On the other hand, railroad trains comprising freight wagons are much less suited to use or adaptation of prior art systems. The trailer wagons of such a train are rarely kept together as a set, and the composition of the train may vary during a single operating period of the tractor locomotive as wagons are added to, and removed from, the train. Also, such wagons, by their nature and usage, tend to be positioned within the train according to the logistics of planned coupling and decoupling from the train that makes it difficult to know other than during a particular journey, for example for maintenance, the whereabouts of any individual wagon, although of course the presence of a particular wagon in the train is usually a fact recorded at the depot of train origin or destination.

Therefore on-vehicle reporting (at the driver's cab) is not ideal, and even then would require full identification data of any wagon in which a condition may be sensed to enable it to be attended to if no longer part of the train, leading to the conclusion of a wagon-specific arrangement, such as in the above publication, rather than a train-specific one.

Also, such freight trains tend to comprise a large number of such trailer wagons so that notwithstanding the cost of providing condition sensing on a potentially large number of wagons, and in any particular train inspection of individual wagons before or after combining into said train, may be impracticable if it requires individual equipment for, and individual inspection of, the brakes of a large number of wheel axle sets.

Furthermore, such freight trailer wagons tend to be primitive in terms of equipment and services such as electrical power and communication buses able to link to each other for transferring data to a central processing and reporting unit on any particular vehicle sub-component and/or the tractor locomotive, and differing designs of, and quantity of, existing stock in use makes adaptation of existing designs difficult to justify. Also, individual wagons are subjected to vastly different degrees of usage which places a further requirement of any equipment having to perform, notwithstanding periods of inactivity, therefore making it difficult to justify costly solutions for individual wagons, and any arrangement which is unable to perform for long periods of inactivity.

Even if a solution were proposed to incorporate the techniques of the prior art into freight trailer wagons during construction, it does not address the economic problem of the large number of such wagons already in use. Because of the operating life of such freight wagons a variety of detailed designs of brakes and friction pads exist which make retro-fitting requiring significant changes to the brake arrangements and/or vehicle as a whole potentially more complex and costly.

Although there is a particular requirement for effecting a cost effective reporting of brake friction lining conditions for railroad freight wagons which are operated as sub-components of a vehicle that is, as a train of them, reporting one or more predetermined conditions in brake friction linings is applicable to any vehicle or vehicle sub-component having any number of braked wheel axle sets, and in keeping with the generality of the foregoing it is an object of the present invention to provide, for a vehicle having a plurality of braked wheel axle sets, a brake friction lining condition reporting arrangement of simple form able to deal with a large number of braked wheel axle sets with more cost effective implementation than hitherto. It is also an object of the present invention to provide a method of determining and reporting at least one predetermined condition in at least one brake friction lining of a vehicle having a plurality of wheel axle sets that is simpler and more cost effective to implement than hitherto.

According to a first aspect of the present invention, there is provided for a wheeled vehicle, having a plurality of braked wheel axle sets spaced apart in the direction of travel and a brake including at least one friction lining and a holder therefor associated with at least one wheel axle set, a friction lining condition reporting arrangement, operable to monitor at least one brake and report existence of at least one predetermined condition in a friction lining of a said monitored brake, comprising friction lining condition sensing apparatus and coupling means associated with the condition sensing apparatus operable to provide condition signals, representative of the sensing state of the condition sensing apparatus, to a signal processor remote from the brake friction lining, the coupling means comprising, for each monitored brake an individually associated coupling transmission arrangement arranged to be disposed with the brake and operable to effect wireless transmission of condition signals, coupling reception means, including a receiver responsive to wireless transmissions from said coupling transmission arrangements, having at least one part thereof movable with respect to the wheel axle sets and disposable in an appropriate positional relationship with one wheel axle set at a time to selectively enable reception of said wireless transmissions from the coupling transmission arrangement associated with that wheel axle set, and a processor responsive to data provided by the coupling reception means, and indicative of reception of a said transmission, to report existence of a said predetermined condition in said particular wheel axle set.

According to a second aspect of the present invention, a method of determining, for a vehicle having a plurality of braked wheel axle sets spaced apart in the direction of vehicle travel, existence, in at least one monitored brake of each of a plurality of the axle sets, of at least one predetermined condition in a friction lining thereof, the method comprising disposing in association with [at least one friction lining of] each monitored brake individually associated friction lining condition sensing apparatus, sensing the existence of a said predetermined condition in any friction lining by the associated apparatus, coupling condition signals indicative of a sensed condition to processing means remote from the monitored brakes, and processing condition signals received by said processing means to report existence of the condition, the method being characterised by effecting coupling of the condition signals associated with any said monitored brake by wireless transmission from coupling transmission arrangements associated individually with the monitored brake to complementary coupling reception means connected to the processing means, causing at least one part of the coupling reception means and wheel axle sets to travel relative to each other in the direction of wheel axle set spacing and, for one wheel axle set at a time, selectively enabling coupling of condition signals from each coupling transmission arrangement to the coupling reception means, recording the positions of wheel axle sets from which transmission is selectively enabled with respect to a datum point of the vehicle, and processing received condition signals to report the existence of a said brake friction lining condition and at least a wheel axle set with which the brake friction lining is associated.

Embodiments of the invention will now be described by way of example with reference to the accompanying drawings, in which
Figures 1 (a) and 1 (b) are plan and sectional elevation views respectively through a rail vehicle at the level of a wheel axle set thereof, illustrating the provision of vehicle braking by way of a disc brake system incorporating substantially planar friction pads and, in block schematic, form a frictional lining condition reporting arrangement in accordance with the present invention, comprising coupling means in the form of coupling transmission arrangement carried by the vehicle brake system and coupling reception means disposed remotely of the vehicle,
Figure 2(a) is a sectional elevation through a brake friction pad and holder of the vehicle of Figure 1 (a), showing the friction pad in the form of a pair of complementary half-pads and the provision of condition sensing apparatus disposed with respect to each half-pad,
Figure 2(b) is a cross section though the brake friction pad and holder of Figure 2(a) in the direction 2b-2b thereof, and preferred disposition of condition sensing apparatus,
Figure 2(c) is a front view of the brake friction pad of Figure 2(a) in the direction 2c-2c thereof, further illustrating its structure as a pair of half-pads,
Figure 2(d) is a sectional elevation through coupling transmission arrangement in accordance with the invention having a housing for the components thereof and a signal coupling member adapted to be disposed in a coupling cavity between the friction pad and holder to effect both signal contact with the condition sensing apparatus and support of the means with respect to the brake system,
Figure 2(e) is a side view of the coupling transmission arrangement of Figure 2(d) illustrating conductive features of the signal coupling member to be disposed within the friction pad holder and detent means permitting retention in, and release from the holder,
Figure 3(a) is a schematic circuit representation of condition sensing apparatus associated with a brake friction lining, trackside processing means and coupling means for transfer of condition signals, including coupling transmission arrangement and coupling reception means,
Figure 3(b) is a schematic circuit representation similar to that of Figure 3(a) but illustrating coupling of signals representing additional friction lining conditions,
Figure 3(c)is a schematic circuit representation similar to that of Figure 3(b) but including an emitter of selection with the trackside coupling reception means and energy-responsive selection control means in the coupling transmission arrangement,
Figure 3(d) is a schematic circuit representation similar to that of Figure 3(c) but wherein the energy-responsive selection control means comprises the power source of the coupling transmission arrangement,

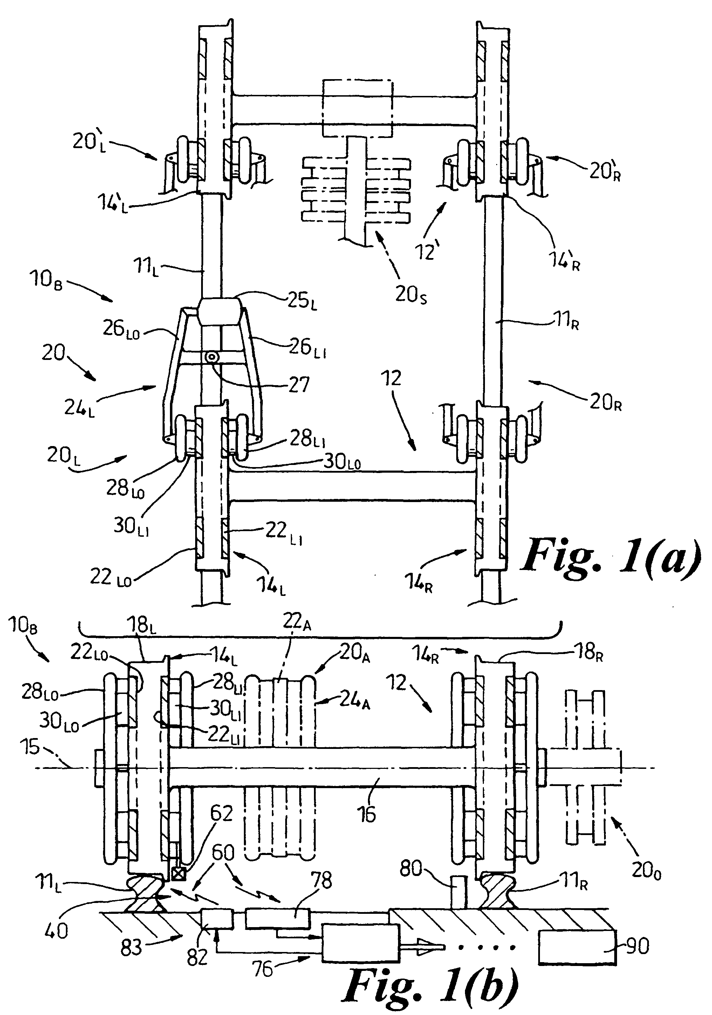

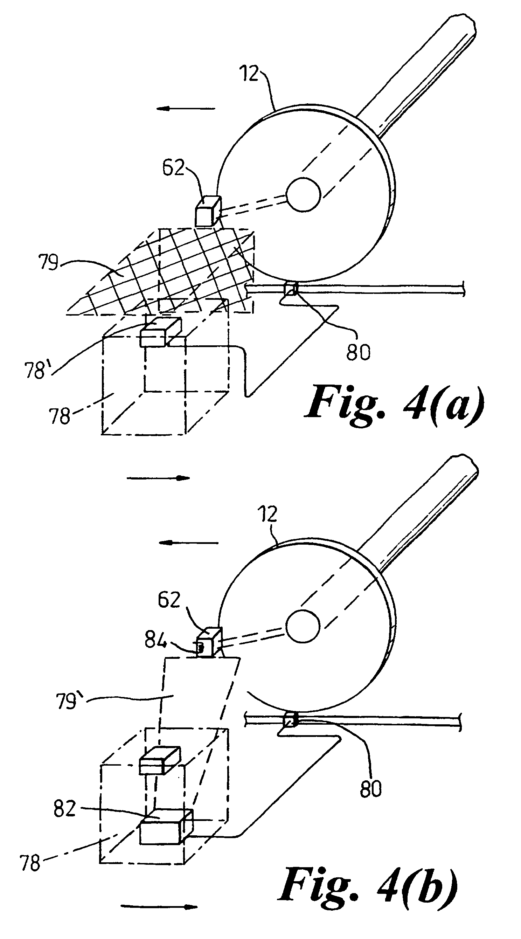

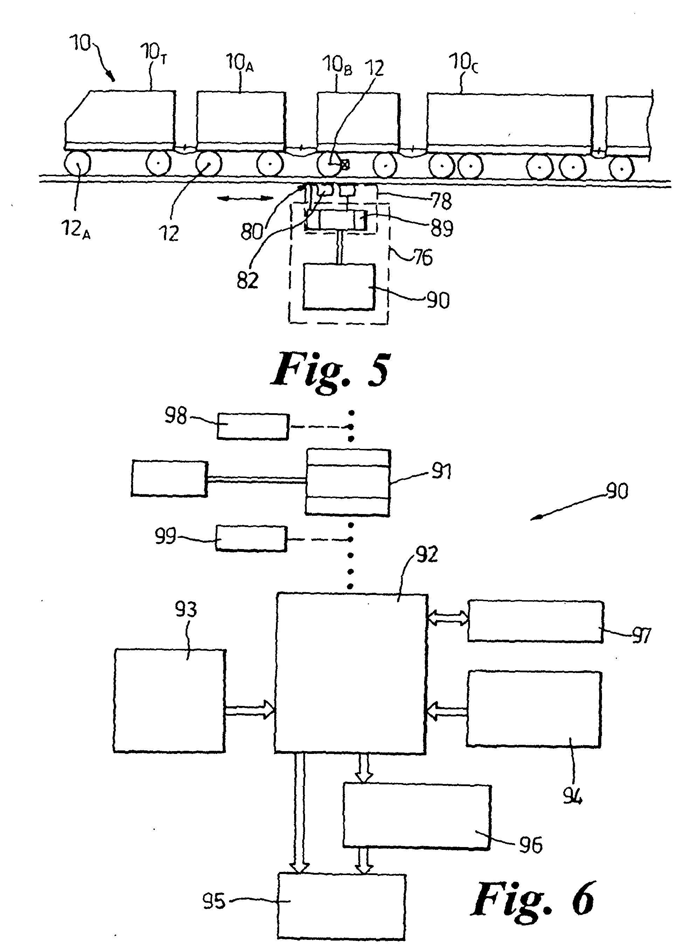

Figures 4(a) and 4(b) are schematic representations of positional relationships between wheel axle set, coupling transmission arrangement of a monitored brake thereof and relatively disposable coupling reception means to illustrate the part played by disposition in operation, Figure 5 is a schematic representation of a train of vehicles including the vehicle of Figure 1(a) as a sub-component thereof, illustrating a plurality of wheel axle sets spaced in the direction of vehicle travel and brake-mounted coupling transmission arrangement, and travel relative to trackside processing means incorporating pre-processing means and more remote identification and reporting means, and
Figure 6 is a schematic block diagram of the identification and reporting means of Figure 5, showing also forwarding interface means.

Referring to Figures 1(a) and 1(b), these show schematically cross sectional plan and cross sectional elevation views through a railroad vehicle 10_{B} mounted for travel along a path, or track, defined by a pair of rails 11_{L} and 11_{R}, by way of a plurality of flanged wheels grouped in pairs in a plurality of wheel axle sets 12 , 12' that are spaced apart in the direction of travel, only one of which wheel axle sets, 12, being shown in any detail. Other, conventional components of suspension, springing, bearings and the like are omitted for clarity.

The wheel axle set 12 comprises a pair of flanged wheels 14_{L} and 14_{R} rotatable about a common axis 15, being coupled to, and spaced from, each other by an axle 16 such that peripheral tread regions 18_{L} and 18_{R} of the wheels run on the rails 11_{L} and 11_{R} respectively.

The vehicle has a braking system 20 which is generally replicated as individual brake pads for each wheel axle set, and often each wheel thereof.

The wheel 14_{L} has associated therewith a brake system part indicated generally at 20_{L} and referred to hereafter also as "brake". This is of disc brake form, comprising segmented disc rubbing surfaces 22_{LO} and 22_{LI}, on outboard and inboard faces of the wheel respectively, and a calliper arrangement 24_{L} mounted adjacent the wheel. The calliper arrangement comprises an actuator 25, force transmitting arms 26_{LO} and 26_{LI} , arm pivot 27 and, at the end of the arms, holders 28_{LO} , 28_{LI} for friction pads 30_{LO} , 30_{LI}, which are pivotally linked to the force transmitting means and disposed to overlie the respective wheel disc rubbing surfaces.

The wheel 14_{R} has associated therewith a corresponding brake system part 20_{R} (details not shown) which is operated in conjunction with brake 20_{L} to effect retardation of the axle set 12, and thus the vehicle. Likewise, the axle set 12' has wheels 14'_{L} and 14'_{R} which have associated therewith brake systems 20'_{L} and 20'_{R}.

Whilst reference is made to Figure 1 (b), it will also be appreciated that as the wheels are fixed with respect to axle 16, a brake system may be formed as an axle brake spaced inboard of the wheels as , shown ghosted at 20_{A}, and corresponding to the arrangement 24_{L} described above, spaced outboard of the wheels as shown ghosted at 20ₒ, or on a separate braking or drive shaft linked to one or more axles by gearing, as shown ghosted at 20ₛ.

Insofar as wheel 14_{L}, brake system 20_{L} and friction pad 30_{LI} and holder 28_{LI} thereof are typical of those in other locations, detail description will be confined thereto for clarity. Notwithstanding the differences, they are each associated by function and proximity with a wheel axle set and the following description is intended to be construed without positional limitation.

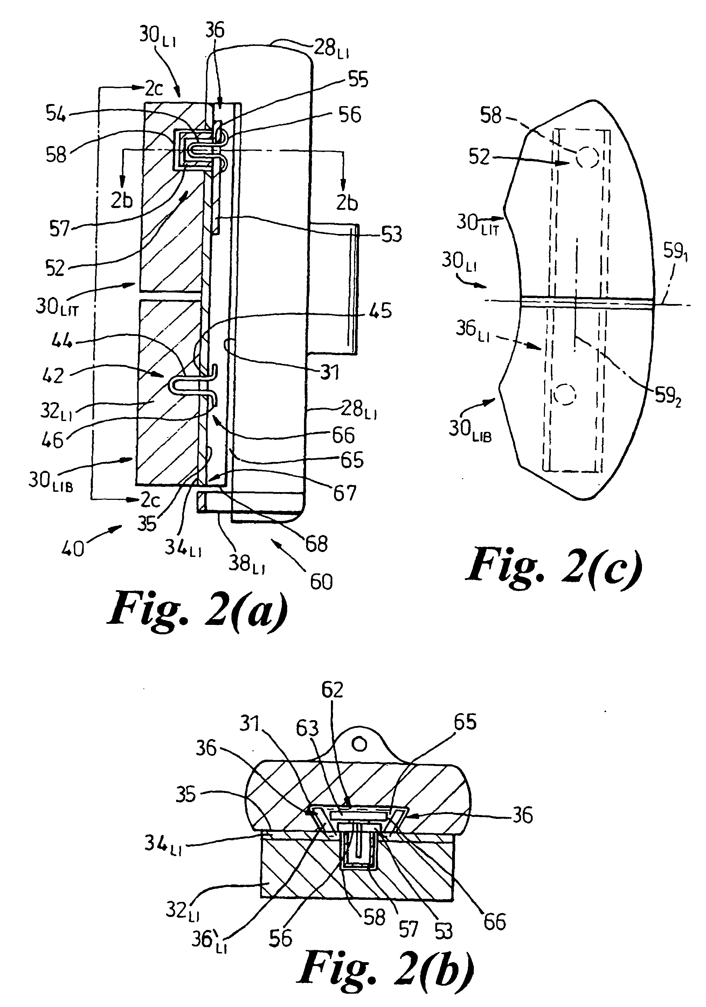

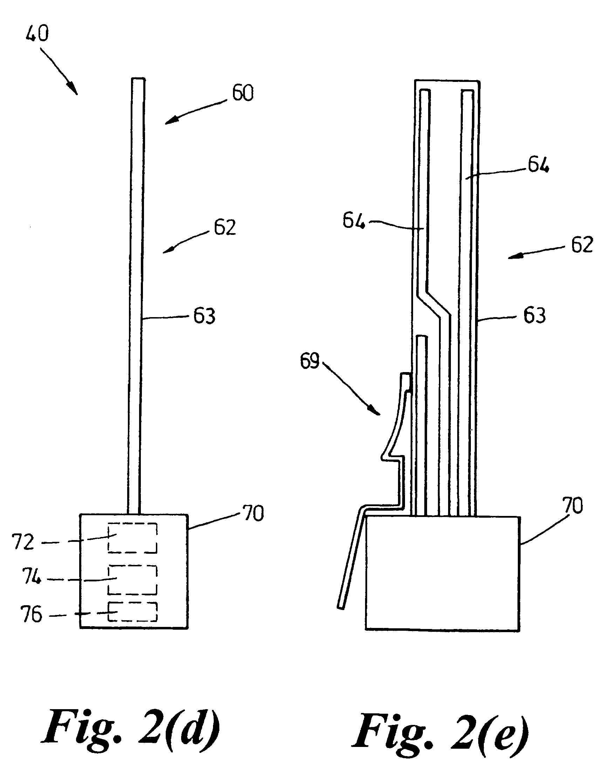

The friction pad 30_{LI} comprises a body of friction material, herein referred to as the friction lining, carried by a backing of metal or the friction material itself, by which the pad is located and held in the holder. Although many structural forms of disc brake systems have been employed in the past, modern rail vehicles have brake friction pads and holders which at least in Europe conform to a UIC standard design, governed by document UIC-541-3, that facilitates fitting and interchangeability. Such a design of disc brake system is shown in greater detail in Figures 2(a) to 2(c), and employs a holder 28_{LI} having a rectilinearly extending locating groove 31_{LI} of dovetail cross-section, and friction pad 30_{LI} comprising a friction lining 32_{LI} and backing 34_{LI}. The backing 34_{LI} has a mounting surface 35_{LI} formed with a rectilinearly extending, upstanding mount 36_{LI} of co-operating dovetail cross-section, whereby the pad can be slidably located in the groove and retained by a clamping member, such as retaining clip 38_{LI}, or other means. The pad mount 36_{LI} may be formed from a metal backing 34_{LI} that has a thickness variation or upturned flanges 36'_{LI} and/or may comprise a body of the friction material itself or a composite thereof. It is also commonplace for a friction pad associated with any one holder to be manufactured as a pair of complementary-shaped half-pads that may be inserted into a holder separately to provide a friction lining that conforms in shape to a segment of the disc rubbing surface. In this specification reference to a "fiction pad" should, in respect of structure, be taken to include reference to a half-pad and, in respect of mounting and operation, to include a pair of half-pads, unless specifically stated otherwise. In Figures 2(a) to 2(c) brake pad 30_{LI} conveniently comprises complementary half-pads which are mounted in the holder generally one above the other, 30_{LIT} being the top pad and 30_{LIB} being the bottom pad.

In accordance with the present invention at least one vehicle brake, such as the brake system 20_{L}, is monitored for existence of a predetermined condition in the friction lining, in particular wear of the friction lining to a predetermined remaining thickness, by provision of a friction lining condition reporting arrangement indicated generally at 40.

In the half pad 30_{LIB} there is disposed condition sensing apparatus 42 having an operational part 44, comprising an electrical conductor, embedded in the friction material 32_{LI} and connected by conductive path 45 to exposed conductor terminations 46 extending proud of the backing mounting surface 35_{LI} , that is, upstanding with respect to the surface of the backing. The embedded conductor 44 is in the form of a so-called abradable loop which extends probe-like from the backing into the body of the lining for a distance representing a wear limit for the friction lining and is the first part of the conductor to be abraded by the wheel disc rubbing surface 22_{LI} when the overlying friction material has been worn away through use. Put another way, the conductor 44 normally exhibits an electrically transmissive state between the terminations but such state is changed to be non-transmissive by existence of a predetermined condition of lining wear.

In the half pad 30_{LIT} condition sensing apparatus 52 is shown comprising a carrier 53 for a probe-like operational part 54, a conductive path 55 and conductor terminations 56. The conductive path extends through the carrier, said operational part and conductor terminations being on opposite sides thereof. The carrier is formed of electrically insulating material and also comprises a housing 57 for the operational part and conductive part, which housing is disposed extending into an aperture 58 formed into the friction material from the pad backing so that the conductor terminations extend away from the backing. The carrier may have the same dimensions as the aperture 58, and effectively a plug therefor, or may have larger dimensions, as illustrated, and overlie the backing surface about the aperture. The housing 58 and the conductor 54 are abradable by the wheel disc rubbing surface when the overlying friction material has been wom away through use and, as for the sensing apparatus 42, the conductor 54 normally exhibits an electrically transmissive state between the conductor terminations but such state is changed to be non-transmissive by existence of a predetermined condition of lining wear.

Although each half-pad is shown incorporating alternative forms of condition sensing apparatus by way of illustration, sensing apparatus of the same form may be provided in each half-pad or apparatus of either form may be provided in one half-pad only of such a pair, being able to respond to a wear level to which the lining of the friction pad as a whole is uniformly subjected, as well as in a unitary, full size pad.

Instead of the or each condition sensing apparatus having an operational part comprising a probe-like wear loop that is confined to a relatively small region of friction lining, it may comprise a plurality of such probe-like loop forms at spaced regions of the pad and joined in series by a conductive path closer to the backing, or may comprise such a conductive path within or surrounding the friction lining at substantially constant distance from the backing that effects a distributed wear loop.

As may be seen from reference to Figure 1 (b) and Figure 2(c), the holder 28_{LI} in this embodiment is mounted with respect to the operating arm 26_{LI} to permit the holder and planar friction pad effected by, half pads 30_{LIT} and 30_{LIB,} to align with the brake disc surface for transmitting brake actuation forces by pivoting about orthogonal tilt axes 59₁ and 59₂. Insofar as it is possible for such pivotal mount to stick, it is preferred that an effective plurality of operational parts are distributed on opposite sides of one or both tilt axes to ensure that at least one of them is predisposed to early abrasion with an associated part of the friction lining in event of such sticking.

Condition sensing apparatus which has an operational part comprising plurality of discretely connected conductor loops in the or each friction lining permits sensing of secondary conditions such as wear reaching different levels in the friction lining that is indicative of wear rate, or response to wear to the same depth occurring at significantly different times in different regions of the pad that is indicative of uneven wear.

It will be appreciated that condition sensing apparatus may also be arranged to respond to a predetermined condition other than lining wear and/or to predetermined secondary conditions occurring thereafter which may usefully indicate consequential or rate effects. Each operational part of the condition sensing apparatus may include, instead of or in series with a conductor that can be disrupted by abrasion due to wear, thermally responsive means that has an analogous effect when exposed to undesirable heating, such as a fusible conductor link, or a thermally responsive switch known per se in the art, or any other transducer providing information, possibly more complex than the binary states usually reported by conventional wear and temperature sensors associated with wear indication and usable repeatedly as temperatures vary.

The operational part of the condition sensing apparatus, whether a conductive loop or otherwise, may be disposed at or beyond the normal limits of friction lining wear, such as in the backing or an underlayer disposed between the backing and normal friction material. Each of the above described condition sensing apparatus 42 and 52 is passive, insofar as each defines a transmission state by way of a level of electrical conduction in a conductor, but it is possible to employ sensing apparatus in which a transmission state is the active production, or cessation of production, of a more complex or characteristic signal when a predetermined condition exists.

Likewise, it is possible to use or adapt condition sensing apparatus employing conductors which conduct other than electric current, such as optical fibres, but which nevertheless exhibit transmissive and non-transmissive states.

The condition reporting arrangement comprises, in addition to the condition sensing apparatus associated with the brake friction pad, coupling means, indicated generally at 60, which is arranged to couple condition signals that are characteristic of the conductive state of the operational part of the condition sensing apparatus to processing means remote from the friction lining. For clarity of description the coupling means 60 is described mainly for the normally transmissive condition sensing apparatus 52 that responds to a conduction interrupting condition, but may be used with the condition sensing apparatus 42 and, with or without adaptation, other forms of condition sensing apparatus some of which adaptations are described hereinafter.

The coupling means 60 comprises a coupling transmission arrangement 62 adapted to be supported by one or both of the friction pad 30_{LI} and the holder 28_{LI} , in this case both. Referring also to Figures 2(d) and 2(e), the coupling transmission arrangement 62 comprises a signal coupling member 63 having a plurality of coupling contacts 64 thereon, the member being arranged to extend into a coupling cavity 65 and therein effect conductive abutment between the coupling contacts 64 and conductor terminations 56 (and/or 46) of the condition sensing apparatus.

The coupling cavity 65 is defined at an interface between the holder and friction pad backing through which brake actuation forces are not transmitted. It may be defined by a recess in either or both that is open towards the other and in this embodiment is defined in the friction pad backing 34, as a backing recess 66 in the mount 36, and closed by the operatively overlying holder 28_{LI}.

The carrier 53 and conductor terminations associated with the condition sensing apparatus are disposed in this backing recess 66 with the conductor terminations upstanding away from the backing towards the surface of the holder.

The coupling cavity extends to, and defines a mouth 67 at, a boundary 68 of the friction pad which the holder does not overlie. Subject to the conductor terminations as discussed below, the signal coupling member 63 of the condition transmission means is suitably dimensioned to slide in the coupling cavity with a clearance fit by way of the mouth whilst the friction pad is held by the holder 28_{LI} , with a part of the signal coupling member extending from the cavity substantially in the plane of the backing. Conveniently the mouth of the coupling cavity is at the lower end of the friction pad and the signal coupling member 63 is releasably held therein by detent 69 latchable with respect to the holder or pad clamping member 38_{LI} permitting its subsequent removal.

Alternatively, the coupling cavity mouth 67 may be of reduced thickness in comparison with that part of the signal coupling member arranged to be disposed fully within the coupling cavity, thereby requiring the signal coupling member and friction pad to slide into the holder together, but also providing retention of the signal coupling member by retention of the friction pad.

The signal coupling member 63 comprises a substantially rigid electrical circuit board on the surface of which are carried substantially planar coupling contacts 64, disposed according to the number and disposition of conductor terminations, and the board is dimensioned to have a thickness greater than the coupling cavity 65 between the upstanding conductor terminations 56 and the holder so that the conductor terminations are deformed or deflected by the inserted coupling member which effects conductive abutment between the coupling contacts and the conductor terminations, notwithstanding variations in clearance between the friction pad and holder.

Preferably, the upstanding conductor terminations 56 are arranged to deform resiliently in a direction substantially transversely to the direction in which the signal coupling member slides into the coupling cavity by way of the mouth, that is, they exert a bias on the member tending to displace it away from the friction pad until inhibited by engagement with the holder, as a boundary wall of the coupling cavity, whilst the terminations are still deflected. Deflection of the conductor terminations thus ensures that they are biassed into the conductive surface-to-surface abutment with the coupling contacts. Furthermore, inserting the signal coupling member in a direction substantially transversely to the direction of termination deflection causes the coupling contacts 64 thereof to rub against the conductor terminations and thereby effect a cleaning as they adapt to the operative surface-to-surface abutment. It will be appreciated that as an alternative to upstanding conductor terminations, the coupling contacts 64 may be formed upstanding with respect to the signal coupling member board 63. Furthermore, both coupling contacts and conductor terminations may be resilient to lessen the possibility or poor signal transmission if one of the abutting pair relaxes.

It will be appreciated that instead of the conductor terminations exerting a bias force on the signal coupling member transversely to its sliding direction within the coupling cavity, they may be caused to exert such bias force along the direction of slide, tending to expel the signal coupling member from the cavity unless it is inhibited by the detent 69 and clamping member or holder.

Likewise, it will be appreciated that the signal coupling member may be supported in the coupling cavity 65 by a plurality of oppositely disposed conductor terminations 56, that is , clamped between them as they exert bias on opposite sides thereof in effecting surface-to-surface abutment rather than biassing the member against a wall of the cavity.

It will be seen furthermore that the signal coupling member 63 may have coupling contacts 64 arranged to abut conductor terminations associated with different operational parts of condition sensing apparatus or different condition sensing apparatus. Also the conductor terminations may be directly extending from the backing, such as those 44, rather than a carrier.

As the signal coupling member is supported with respect to the friction pad and holder by way of the coupling cavity, the coupling transmission arrangement as a whole is supported by the signal coupling member. The coupling transmission arrangement further comprises, mounted on the signal coupling member contact board 63 at an end region thereof arranged to extend away from the coupling cavity, a cover 70 containing or encapsulating components for turning the conductive state of the condition sensing apparatus into condition signals and presenting them to the remote processing means.

Such presentation may be by way of a physical link to a remotely disposed receiver of such transmissions that interfaces with the processing means or by so-called "wireless transmission", which is used in this specification to mean transmission through the atmosphere without such physical link, notwithstanding the form of transmitter. That is, it is intended that wireless transmission may be by way of electromagnetic radiation at radio or higher frequencies, or by pressure variations as pneumatic or sound signals. preferably, but not essentially, by way of high frequency transmission to a receiver of such transmissions that interfaces with the remotely disposed processing means. Physical links may be employed additionally to transmit signals as electrical or liquid pressure variations, as well as the above forms. However, the use of wireless transmission not only eases constraints on the relative positioning of the remote processing means but also disposition of the signal coupling member with respect to the brake system.

In this embodiment the coupling transmission arrangement comprises, within the cover 70, a condition transmitter 72, a power source 73 and condition control means 74. As the signal coupling member board 63 is extends away from the friction pad and holder in a downward direction substantially in the plane of the wheel, the separation between cover 70 and the coupling cavity is chosen to effect a degree of both physical and thermal isolation.

The condition transmitter effects wireless transmission by way of electromagnetic radiation at a suitable frequency, but preferably as radio frequency radiation in the 418MHz band or in an equivalent band permitted by regulatory authorities in any locality of operation.

Furthermore, the processing means, indicated at 76 in Figure 1(b), is disposed remotely of the vehicle itself and the coupling means 60 comprises also complementary coupling reception means 78, including a receiver of the wireless transmissions, disposed between the rails 11_{L} and 11_{R} at track level and what may be conveniently referred to as trackside. It will be appreciated that a least the receiver part of such reception means, particularly of radio frequency transmissions, may be disposed other than between the rails, such as alongside the track or overhead, and the term "trackside" is used herein as including such options. Wireless transmissions, comprising condition signals, received by the trackside coupling reception means are passed to the processing means for processing, or for pre-processing and forwarding to more remote identification means for fully utilising the information of the condition signals, and reporting existence of a predetermined condition in any convenient manner, one or more being as described below.

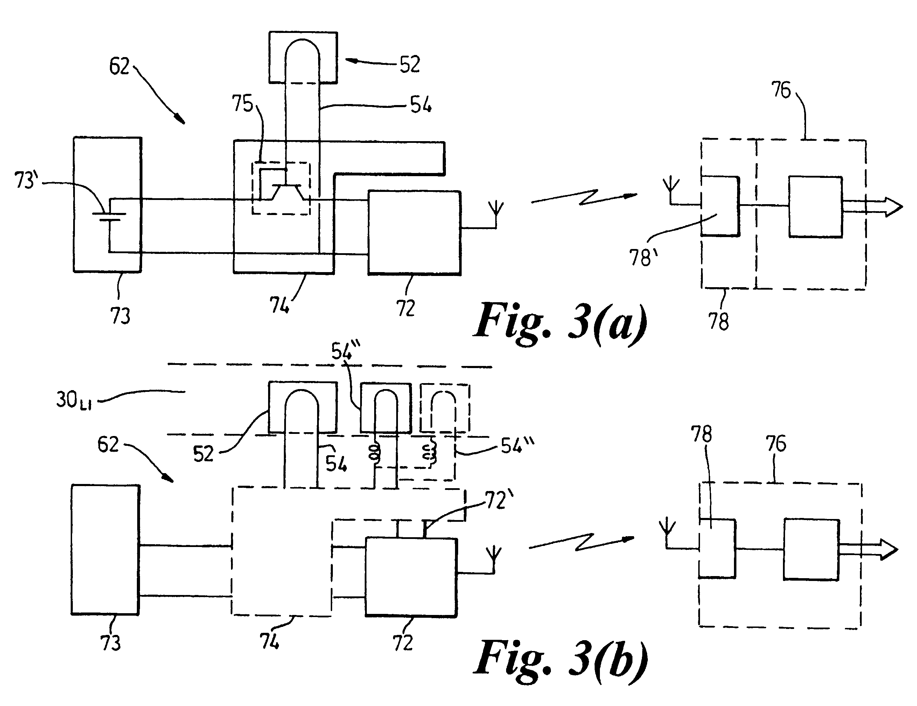

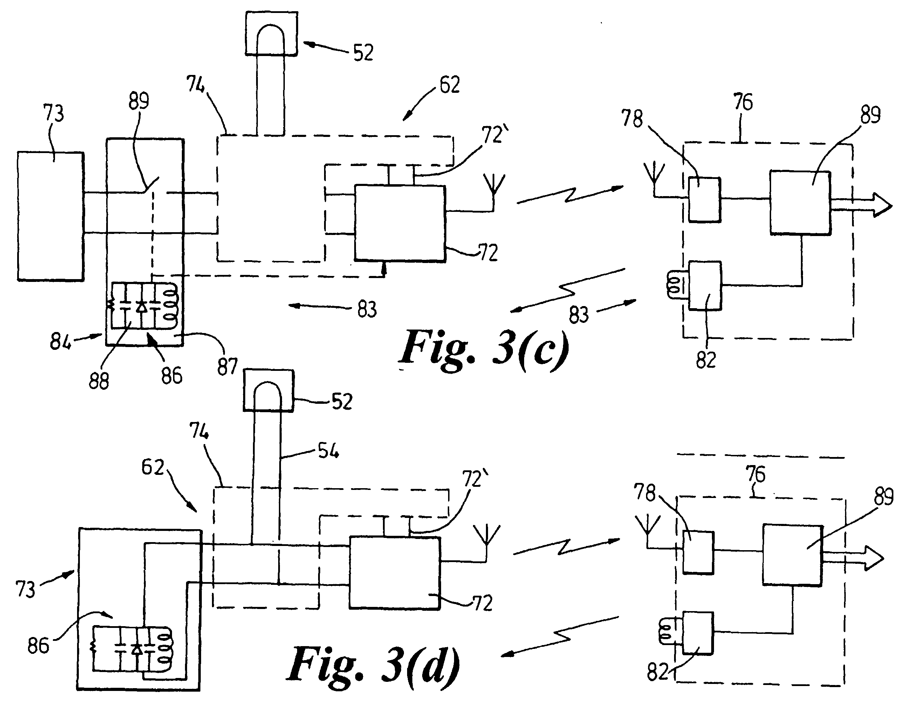

Referring now to Figures 3(a) to 3(d), these illustrate in schematic circuit form the condition sensing apparatus 52, substantially as described above, but also with variants thereof as described, and various embodiments of coupling means.

Referring to Figure 3(a), in its simplest form the coupling transmission arrangement 62 has power source 73 provided by a battery 73' which is connected to the condition transmitter 72 by way of condition control means 74. The battery may be a replaceable dry-cell or a chargeable cell, arrange to be kept charged by, for example an individual turbine driven by vehicle motion. The condition control means includes a low drain semiconductor switch 75 in series with the source and transmitter to interrupt power whilst the conductive path of the condition sensing apparatus is complete between its terminations, that is, in its transmissive state, but to connect them when the conductive path of condition sensing apparatus is interrupted. The transmitter is arranged to simply oscillate and emit radiation at the prescribed frequency when empowered by source 73, that is, transmit a condition signal comprising unmodulated radiation therefrom, which the condition control means enables it to do. The coupling reception means 78 responds to reception of such radio frequency transmission to provide a received signal of suitable form for the processing means 76 that is, by virtue of its existence, indicative of the condition existing within the friction lining. How each received signal is further processed and interpreted for reporting is described hereinafter, following discussion of alternative forms which the condition sensing apparatus, coupling means and condition signals may take.

The condition transmitter 72 may be arranged to transmit a radio frequency signal that is modulated in amplitude, phase or frequency, possibly as a digitally interpretable code, that is demodulated or interpreted in the coupling reception or processing means in order to convey more information. It will be appreciated that the condition signal may take such modulated form as the initial form of transmission resulting from the condition sensing apparatus first identifying the existence of a predetermined condition and/or as a result of subsequently sensing a secondary predetermined condition as outlined above.

An exemplary arrangement is schematically illustrated in Figure 3(b) which shows the condition sensing means 52 in a form having a second conductor loop 54' disposed within friction lining 30_{LI} at different depth from the backing than the conductor loop 54. The conductor loops are connected to the condition control means 74, conductor loop 54 being connected to the power enabling switch 75 and the loop 54' being connected to a modulation control 72' of the condition transmitter 72. Thus in operation, prior to the existence of wear that results in disruption of conductor 54 there is no transmission; upon existence of the wear condition sensed by disruption of conductor loop 54 the transmitter 73 is empowered and transmits with zero or first modulation. When subsequent wear disrupts conductor loop 54' the modulation is changed and the condition signal is therefore characteristic of this secondary predetermined condition. More secondary - condition conductor loops may be employed, as illustrated at 54", if each forms part of the modulation control such that as and when each conductor loop is disrupted the transmitter signal modulation is characteristically changed. Such conductor loops may be within tuned circuits that control the frequency or amplitude of analog transmissions or provide jumpers that effect definition of a digital code which is changed by each disruption, and thereby the condition signal modulation. As mentioned above, such detection of condition signals at different levels may be related to derive a measure of wear rate, but analogously, a plurality of such conductor loops at the same depth but arrayed spatially about the friction pad may provide detection of condition signals at different times that derive a measure of wear uniformity.

For any single wheel axle set it may also be useful to confine coupling between the vehicle-borne coupling transmission arrangement and trackside coupling reception means to when an appropriate positional relationship exists between them. As the condition transmitter may be controlled as to transmitted power and beamwidth, and the receiver of the coupling reception means as to sensitivity and field of view, such coupling may be selectively enabled spatially, in accordance with a transmission and/or reception envelope and further modified temporally when there is relative motion between the vehicle borne coupling transmission arrangement and trackside coupling reception means.

Referring to figure 4(a) there is shown schematically how a coupling transmission arrangement 62 associated with a wheel axle set 12 is caused to travel relative to coupling reception means 78, in particular receiver 78' thereof and assume, either transiently by continuous relative motion or more prolonged by intermittent motion, an appropriate positional relationship in which the transmission and/or reception spread and sensitivity defines an envelope 79, shown cross hatched, which enables reception of condition signals.

It will be appreciated that if necessary, for example if the receiver 78' is capable of receiving transmissions from several coupling transmission arrangements, the coupling-enabling positional relationship may be further constrained or selectively enabled to receive only from the coupling transmission arrangement associated with the particular wheel axle set by detecting and/or otherwise recording (for example manually) the positional relationship between the coupling reception means and the wheel axle set. As shown, a known wheel or axle detector 80 may be employed to define existence of a positional relationship between the coupling reception means and wheel axle set.

There is also the possibility of effecting control over the wireless transmissions themselves. Referring to Figure 4(b), which is a schematic view similar to Figure 4(a) and more fully described below with reference to Figure 3(c), the coupling reception means 78 includes a source 82 of selection energy emitted towards, and receivable by, the coupling transmission arrangement 62 associated with the wheel axle set 12 when it is in an appropriate positional relationship therewith, as shown by emission and/or reception envelope 79'. The selection energy received by the coupling transmission arrangement 62 may enable it to effect wireless transmission when in the positional relationship defined by the envelope.

For more precise control the source of selection energy may be controlled by its position with respect to a wheel axle set through recording by wheel/axle detector 80 or manually. The selection energy may enable wireless transmission in a number of ways. In one form the reception of detection energy by the coupling transmission arrangement may effect selection control that permits transmission of a condition signal, should a predetermined condition be sensed in an associated friction lining. in another form, the reception of selection energy may effect wireless transmission of a confirmation signal which indicates correct coupling, and therefore correct functioning, absent a sensed condition in the monitored brake, such confirmation signal ceasing or changing characteristics to permit transmission of, or comprise, a condition signal. Such selection energy may be modulated to permit more control over the coupling transmission means and/or may also, by its reception, contribute to, or comprise, the source of operating power for the coupling transmission arrangement.

Referring now to Figure 3(c), the coupling reception means includes selection means, indicated generally at 83, which is responsive to an instantaneous positional relationship between the trackside coupling reception means 78 and the coupling transmission arrangement 62 to enable condition signal transmission. The selection means 83 comprises trackside source 82 capable of emitting electromagnetic energy in the 125 KHz radio frequency band and, in the coupling transmission arrangement 62, selection control means 84 which is operable to control supply of power to the condition transmitter for a period limited by the duration of reception of said energy.

In Figure 3(c) the selection control means 84 comprises energy receiving means 86 incorporating a tuned circuit 87 and rectification means 88, responsive to the emitted energy to produce a d.c. (or other desired) signal, and also an electric switch 89 responsive to the signal to close and connect the power source 73 to the condition control means 74. The condition control means 74 is connected to the condition sensing apparatus 52 and switched in accordance with the conductive state thereof, whereby only if the selection control switch is closed whilst a predetermined friction fining condition exists can the transmitter send a condition signal.

Such selection means 83 is thus capable of prolonging the operating life of a battery power source, but it will be appreciated that the selection control means 84 may function within the coupling control means for other purposes. The enabling energy received at the selection control means may (notwithstanding rectification) set the condition transmitter 72 to transmit condition signals in a form wherein the state of the condition sensing apparatus changes the nature of the condition signal rather than its presence or absence per se. For example, the selection control means 84 may be the principal control in terms of enabling the condition transmitter 72 to transmit radiation and the condition control apparatus 52 be coupled to a modulation control 72' of the transmitter. By such configuration, the condition transmitter may emit a 'confirmation' signal when the coupling transmission arrangement is disposed correctly with respect to the energy emitter/coupling receiver means that indicates that it is able to transmit a condition signal correctly should a predetermined condition exist, or put another way, that it is not faulty. Conveniently, the form of such confirmation signal is dependent upon the transmission state of the condition sensing apparatus such that the confirmation signal also confirms the status of the condition sensing apparatus and becomes a condition signal when a predetermined condition exists.

Insofar as the selection control means 84 utilises energy emitted from the trackside selection means source 82, it may serve to boost the charge of the battery power source 73 if it receives such selection energy frequently. However, as such energy reception coincides substantially with the requirement for transmission, it may also comprise the power source of the coupling transmission arrangement and, if appropriate, of forms of powered condition sensing apparatus not detailed herein. This form of power source may comprise a direct substitution for the battery in any of the above describes variants, but a further arrangement is illustrated in Figure 3(d). The energy receiving means 86 comprises the sole power source 73 and is coupled to the supply to the condition transmitter 72 by way of the condition control means 74 which connects the normally conductive path of the condition sensing apparatus 52, that is, conductor 54, as a shunt across the power source, thereby preventing the condition transmitter 72 from functioning until such time as a predetermined condition exists in the friction lining, interrupting the conduction path and removing the shunt.

It will be appreciated that although the condition transmitter and condition reception means are paired, it may also be appropriate to pair the energy emitter 82 and selection control means 84 of the selection means 83 by choice of frequency or modulation of the energy signal. Such a facility may be useful if the condition transmitter is capable of transmitting on a number of channels or different modulation codes; the energy emitter, insofar as it is disposed in the trackside vicinity of the condition reception means, may signal to the condition transmitter which channel or modulation to use in coupling with the coupling reception means.

Such a combination of condition sensing means and coupling transmission arrangement which requires no on-vehicle power source is particularly suitable for use with vehicles having no power source or vehicle sub-components, that is, trailer wagons as discussed above, which are often decoupled from powered parts of vehicles and expected to go for long periods without need for brake friction lining maintenance, and furthermore suitable for retro-fitting to existing vehicles without major modifications thereto. The forms of condition sensing apparatus and coupling transmission arrangement described above may readily be incorporated in newly manufactured brake pads or assembled with respect to replacement pads provided only with suitable apertures and a coupling cavity in the mount. Friction pads equipped with such condition sensing apparatus may be employed absent coupling transmission arrangement in existing holders of non-monitored brakes without modification thereto, and any brake of the various types outlined above should be capable of being monitored, insofar as the coupling transmission arrangement is connected intemally of, and mounted suspended from, the pad and/or pad holder by requiring no more than suitable modification to the pad clamping member.

Notwithstanding the transmission of signals indicative of a predetermined condition within the friction lining, the condition transmitter may, if it can transmit a code or the like characteristic thereof, identify the structure of the brake and friction pad, and such information may be relevant to interpretation of the condition signal or simply indicate in advance what type of friction lining is required if replaced.

It will be appreciated from Figures 4(a) and 4(b) that the ability to selectively enable reception of condition signals and, if appropriate, confirmation signals is operable irrespective of which part of the coupling reception means is moveable with respect to the wheel axle set associated with the coupling transmission arrangement; conveniently it is both, but need not be. It is reiterated that it is not necessary for the vehicle to change position with respect to stationary coupling reception means; the latter (or at least the one part) may be movable relative to a stationary vehicle to assume the, or a number of, appropriate positional relationships.

Whereas the above described situation of a single wheel axle set and coupling reception means is appropriate for the purpose of explanation, the present invention is particularly concerned with identifying and reporting existence of predetermined condition or conditions in any monitored brake of a plurality of wheel axle sets which are spaced apart in the direction of vehicle travel by way of coupling means that has, for each monitored brake associated with a wheel axle set, an individually associated coupling transmission arrangement which effects wireless transmission to coupling reception means common to the plurality of coupling transmission arrangements. It is more particularly concerned with selectively enabling coupling between each said coupling transmission arrangement and the coupling reception means that not only discriminates coupling associated with different wheel axle sets but also results in reporting not only existence of a sensed predetermined condition in a monitored brake associated with a wheel axle set but also which wheel axle set. Building on the above identification, it is also within the ambit of the invention to identify, for a vehicle which comprises a plurality of wheeled sub-components in tandem, that is, a train, which sub-component has the wheel axle set for which a monitored brake friction lining condition has been sensed.

Referring to Figure 5 in addition to Figure 1 (a), there is shown a railroad vehicle 10 as a train made up of tractor locomotive 10_{T} trailing a plurality of sub-component trailer wagons 10_{A}, 10_{B}, 10_{C} ..., each of which has a plurality of wheel axle sets, as described above for wagon 10_{B}, that are spaced apart in the direction of vehicle travel. Each wheel axle set has a plurality of brakes having friction linings which may be monitored and functionally coupled with the single coupling reception means 78 of processing means 76 by being identical in terms of condition signal transmitted in response to sensing of a predetermined friction lining condition. All, or some only, of the brakes may be monitored for one or more predetermined conditions in the friction linings thereof, but each monitored brake has, in addition to a friction pad with condition sensing apparatus, such as 52, a coupling transmission arrangement 62 of the form shown in Figure 3(d) and empowered when selected by reception of radio frequency energy from trackside emitter 82.

As the vehicle (train) travels relative to the processing means the wheel axle sets pass the processing means sequentially, one at a time, although the separation between successive passes may vary according to how the axles are distributed on each trailer wagon. As each wheel axle set passes the vicinity of the processing means the coupling transmission arrangement of each monitored brake is empowered and if a predetermined lining condition is sensed a condition signal is transmitted for reception by the coupling reception means. As mentioned above, the condition transmitter and/or coupling receiver may be constrained in terms of beamwidth in the direction of travel and/or strength and/or sensitivity respectively to define a coupling envelope 79 that avoids received signal crosstalk from any condition signals from an adjacent wheel axle set inadvertently selected by the energy emission. The selection energy emission may be confined spatially to a relatively narrow beam 79' that avoids selecting the coupling transmission arrangement of any adjacent wheel axle set, but preferably is confined temporally and emitted for a time interval, or modulated with selection control signals that effect wireless transmission for a time interval, that avoids such crosstalk. Selection may be for a time interval which is fixed, but takes no account of the speed of relative passage, or variable, on the basis of recording by detection or otherwise the relative passage of successive wheel axle sets. Employing such detection is preferred as it enables a variable duration coupling window that permits reception of transmissions from brakes associated with each wheel axle set until the next usurps its position, even if such brakes are displaced with respect to the axle, such as 20ₛ in Figure 1(a).

Thus by the simple expedient of employing identical, unpowered coupling transmission arrangement for each of the monitored brakes of a multi-axle vehicle (train), it is possible by a common off-vehicle signal reception and processing means 76 to report existence of a predetermined condition in any of the relatively few friction linings associated with any wheel axle set of a large number of axle sets of the vehicle.

Knowing that a condition exists somewhere along the vehicle is of limited practicality when a large number of wheel axle sets are involved and it is within the scope of this invention to effect identification of which vehicle sub-component (wagon), axle set or even brake contains a said predetermined condition, within the constraints of information available.

In general, such information may be available in terms of stored logistical information regarding make-up of the vehicle (train) or may be available by configuring the condition sensing apparatus and/or coupling transmission arrangement associated with any wagon or brake to provide condition signals implicitly identifying it.

It will be appreciated that such brake- or wagon-specific signal, notwithstanding its inherent complexity, requires less processing prior to condition reporting but requires each coupling transmission arrangement fitted to the vehicle (train) to be individually configured.

On the other hand, by employing identical coupling means at any of the wheel axle sets of the vehicle, both the means and their fitting may be simplified, and the process of identifying and reporting a predetermined friction lining condition will be described for the use of such identical coupling transmission arrangement at a plurality of wheel axle sets. The coupling reception means 78 has associated therewith as described above, a trackside wheel or axle counter 80 that is operable to detect the passage of each wheel axle set, the first one 12_{A} comprising a datum point of the vehicle (train), so that the detection of each subsequent wheel axle set permits the coupling reception means 78, for other part of processor 76, to effect with the wheel detector 80 a recorder 78" of the axle set position within the vehicle (train), which can be correlated with any condition signal, and if appropriate a confirmation signal, received from the axle set during its passage to provide a tabular or graphical representation of the individual signals that permit correlation and/or be processed with the signals in processor 76 to provide an identification signal that contains both condition-existence and axle-location information.

In a situation where the vehicle (train) is to remain intact, any such identification signals may be reported and any wheel axle set approached by counting from the datum point and permitting maintenance personnel to make a more detailed examination and/or friction pad replacement, as discussed further below.

It will be appreciated that it is convenient for such wheel axle set 12_{A} to form the datum point but the datum point may be defined by any other feature positively detected by the coupling reception means or even an active, vehicle specific transponder emitter.

The processor 76 may be a unitary device located in the vicinity of the coupling reception means but may practicably comprise a pre-processor 89, located with the coupling reception means 78 and axle detector 80, and identification means 90 disposed in a more convenient location typically at a maintenance depot or train assembly yard, and to which data from the pre-processing means is forwarded by forwarding interface 91. The identification means 90 and forwarding interface are shown in greater detail in Figure 6.

In a situation where the vehicle (train) will, or may be, dismantled, any identification signals are further processed by the identification means to identify the particular vehicle sub-component (wagon) on which the wheel axle set giving rise to the condition signal is located.

The identification means 90 includes a central processing unit (CPU) 92 provided with a data link to a schedule store 93 which includes details of the vehicle (train) make-up, namely the position of each wagon and wagon identity, its serial number. The identification means CPU is also provided with a data link to a database 94 of wagon (vehicle) specification data, identifying for each wagon at least how many wheel axle sets it has and possibly the number of brakes or monitored brakes on each wheel axle set. The identification means is thus able to construct a virtual vehicle (train) in terms of axle set disposition of the wagons and translate received identification signals into wagon identities and possibly wheel axle set or sets thereof. Data signals comprising such identification may be fed to a reporting device 95, such as a printer or visual display unit. Altematively or additionally, such data signals of identification may be fed to maintenance scheduling arrangement 96 wherein any particular wagon identified may be booked for at least friction lining maintenance.

It will be appreciated from the above discussion regarding the nature of predetermined conditions sensed in a friction lining and the possibility of producing different (secondary) condition signals that relate to secondary lining conditions, these will also be received at the processing means and forwarded to the identification means. The identification means may record at 97 all condition signals in relation to a particular vehicle (wagon) axle set and if subsequently identification signals representing such secondary condition signal are received, performing a wear-rate test to determine if such friction lining condition requires reporting and or maintenance action not warranted by existence of the first predetermined condition.

As mentioned above, the identification means is most conveniently remote from the trackside processing means, but it need not be so. If it is, forwarding of identification signals to such remote identification means may be directly in real time or by data burst of signals collected in store 98 by way of forwarding interface 91 that employs a land line or electromagnetic transmission. Forwarding may alternatively be effected by way of interface 91 that may be physically transported between the trackside location and the location of the identification means 90. Such forwarding interface 91 may be carried by the vehicle (train) itself with identification signals forwarded thereto (most conveniently as a stored data burst) when it is at a predetermined distance along the track from the trackside location of the processing means; when the vehicle (train) returns to the depot, it can download the identification data for processing, possibly by way of signal store 99.

As described above, if the coupling transmission arrangement is not specific to any brake, the identification means is able only to identify a wheel axle set in which a friction lining condition exists, not the particular brake of the axle set. In practice, this may not be a problem as existence of any friction lining condition on the vehicle (wagon) may justify physical (visual) inspection of each brake and its friction lining on the identified vehicle (wagon) or identified axle. However, if the difficulty of access and/or time taken is considered unacceptable, the above arrangement may be adapted to facilitate identification of a specific brake or friction lining. The trackside processing or pre-processing means may be formed as a trans-portable unit which may be taken to, and directed at, the coupling transmission arrangement associated with an individual brake friction lining. Once illuminated by selection energy emitted by the unit, the coupling transmission arrangement will return a condition signal if a predetermined condition exists in the brake friction lining. The processing means of the portable unit may simply provide a visual indication reporting if a predetermined condition exists that has given rise to a transmitted condition signal. Insofar as the operation is not required to be performed whilst there is relative passage, the sensitivity and/or beamwidth of the coupling reception means may be lower and, if appropriate, the selection means energy emission may be lower and/or of narrower beamwidth to ensure that the coupling transmission arrangement associated only with a specific brake friction lining is addressed.
Alternatively, if the coupling transmission arrangement is disposed so that it is visible by maintenance personnel the portable coupling reception means and processing unit may comprise simply a selection means energy emitter that can be directed at specific coupling transmission arrangement, which coupling transmission arrangement also effects wireless transmission of visibly or audibly recognisable signals identifying that it is transmitting a condition signal, should a predetermined condition exist. Additionally, if the coupling transmission arrangement is of the form that responds to illumination by the selection energy emission to provide a confirmation signal absent the predetermined condition, such visible or audible transmission, or a further one, may be arranged to confirm that the coupling transmission arrangement has been correctly addressed and that a predetermined condition does not exist within the friction lining.

Similarly, if it is practicable to presume that all of the brake friction linings on any axle behave similarly and to attend to all when one exhibits a predetermined condition, then it may be appropriate to monitor only one brake friction lining per wheel axle set by way of condition sensing apparatus and coupling transmission arrangement associated therewith.

The number of brakes chosen or available for monitoring may vary from axle set to axle set, not least according to vehicle (wagon) design. If the coupling transmission arrangement is manufactured or configurable for use with a particular one of such small number of positions, by virtue of transmission frequency or modulation frequency or code, then signals received and processed from the coupling transmission arrangement may identify both axle set and brake position on the axle set. If the coupling transmission is further programmable with the vehicle (wagon) type, the signals may furthermore provide notification of the type of friction lining required as a replacement. If the coupling transmission arrangement is programmable with vehicle (wagon) identification, the processing and identification means may be much simplified but in exchange for losing the ability for identically manufactured coupling transmission units to be deployed quickly and relatively indiscriminately by maintenance operatives having little skill in the installation and connecting of brake condition reporting arrangements.

It will be appreciated that the processing means or any component part of it need not be remote of the vehicle as long as it can receive data from the part of the coupling reception means which is movable with respect to the wheel axle sets. As will be clear from the above, the relatively movable part may be the wireless transmission receiver part of the coupling reception means, the selection energy emitter or both. It will be understood that the part of the coupling reception means which is movable with respect to the wheel axle sets need not be trackside or otherwise remote of the vehicle provided the relative positional relationships are ascertainable and data forwarded to a processor containing or having access to suitable information for processing it.

It will be appreciated that as an alternative to the above described operation in which a vehicle is caused to move past the coupling reception means, the coupling reception means, or appropriate part of it, may be moved with respect to a stationary, or even moving, vehicle. In either case, the recording of the relative passage of each wheel axle set may be effected manually, although automatic detection may be considered more reliable if apparatus and siting permits.

Although all of the detailed description has been in relation to coupling from condition sensing apparatus disposed in or with the friction lining of each monitored brake, it will be appreciated that insofar as identifying the wheel axle set location of a brake is concerned, the condition sensing apparatus associated with a friction lining of that brake may be disposed remotely of the friction lining itself, such as on an actuation of adjustment linkage.

It will be appreciated that although the invention has been described with reference to a railway vehicle disc brake system other railway vehicle brake forms, it is equally applicable to braking systems of different forms, for example tread brakes which employ friction pads in the form of brake blocks for bearing against the rim of a wheel or equivalent, and conforming to different standards by making suitable modifications to the condition sensing means and/or the mounting of the coupling transmission arrangement with respect thereto. It is not, of course restricted to use with railway brake systems and may be employed, with disc or drum brakes of road going vehicles which, although self-steering and not confined to following a track, may be caused to follow a prescribed path or track when entering or leaving a depot or en route in order to have any predetermined condition of a brake friction lining reported.

It will be understood that whereas maximum benefit in terms of cost and labour saving is to be found with a vehicle in the form of a long train having a plurality of wheel axle sets, an arrangement in accordance with the invention may be employed with vehicles having fewer wheel axle sets and, if desired, completely independently of any vehicle power source, provided of course that the vehicle is constrained to effect relative movement with respect to trackside processing means.

## Claims

1. For a wheeled vehicle (10_{B}), having a plurality of braked wheel axle sets (12, 12') spaced apart in the direction of travel and a brake (20_{L}) including at least one friction lining (32_{LI}) and a holder (28_{LI}) therefor associated with at least one wheel axle set, a friction lining condition reporting arrangement (40), operable to monitor at least one brake and report existence of at least one predetermined condition in a friction lining of a said monitored brake, comprising friction lining condition sensing apparatus (42, 52) and coupling means (60) associated with the condition sensing apparatus operable to provide condition signals, representative of the sensing state of the condition sensing apparatus, to a signal processor (76) remote from the brake friction lining, **characterised in that**
the coupling means (60) comprises, for each monitored brake an individually associated coupling transmission arrangement (62) arranged to be disposed with the brake and operable to effect wireless transmission of condition signals, coupling reception means (78), including a receiver (78') responsive to wireless transmissions from said coupling transmission arrangement, having at least one part thereof (78') movable with respect to the wheel axle sets and disposable in an appropriate positional relationship with one wheel axle set at a time to selectively enable reception of said wireless transmissions from the coupling transmission arrangement (62) associated with that wheel axle set, and a processor responsive to data provided by the coupling reception means, and indicative of reception of a said transmission, to report existence of a said predetermined condition in said particular wheel axle set.

2. An arrangement as claimed in claim 1 including a recorder (78") operable to record, for the appropriate positional relationship between said at least one movable part of the coupling reception means (78) and each wheel axle set (12), the position of the wheel axle set relative to a datum point (12_{A}) of the vehicle.

3. An arrangement as claimed in claim 2 in which said at least one movable part (78') of the coupling reception means (78) is arranged to be disposed in appropriate positional relationship with at least each wheel axle set (12) having a monitored brake in turn, the recorder (78") is arranged to record the position of each wheel axle set with respect to the vehicle datum point (12_{A}) and the processor is responsive to reception of a condition signal to identify, by association of said condition signal with a said wheel axle set of the vehicle, the existence of a said predetermined brake friction lining condition and the position of the wheel axle set (12) in which the condition exists relative to the vehicle datum point.

4. An arrangement as claimed in claim 3 in which said at least one movable part of the coupling reception means (78) is arranged to travel relative to the vehicle and record an appropriate positional relationship with each wheel axle set (12) of the vehicle in turn.

5. An arrangement as claimed in claim 3 or claim 4 suitable for a vehicle (10) comprising a plurality of wheeled sub-components (10_{T}, 10_{A}, 10_{B}, 10_{C}) disposed in tandem, in which the processor (76) includes storage means (93) to store the constitution of the vehicle in terms of vehicle sub-component identities, and for each component the number of wheel axle sets thereof, the processor being responsive to reception of a condition signal and recordal of relative passage of a wheel axle set to provide a reporting signal identifying the existence of a said predetermined brake friction lining condition and identity of a vehicle sub-component in which the condition exists.

6. An arrangement as claimed in any one of claims 1 to 5 in which said at least one movable part comprises the receiver (78') arranged to selectively enable reception by defining in an appropriate position a transmission and/or reception envelope (79) which excludes coupling of transmissions from coupling transmission arrangement (62) not having an appropriate positional relationship therewith.

7. An arrangement as claimed in any one of claims 1 to 6 in which said at least one movable part comprises an emitter of selection energy (82), receivable by associated selection energy receiving means (86) disposed at each coupling transmission arrangement (62), arranged to selectively enable reception of wireless transmissions by the coupling transmission arrangement by defining in an appropriate position with respect to a wheel axle set a selection energy emission and/or receiving envelope (79') with a coupling transmission arrangement which excludes wireless transmission from a coupling transmission arrangement not having an appropriate positional relationship therewith.

8. An arrangement as claimed in any one of the preceding claims in which each coupling transmission arrangement (62) comprises a condition transmitter (72), a power source (73) and condition control means (74) responsive to the condition sensing apparatus (52) to control the occurrence and/or form of wireless transmissions from the condition transmitter.

9. An arrangement as claimed in any one of the preceding claims in which the coupling reception means (78) comprises a plurality of reception channels and the coupling transmission arrangement (62) associated with any monitored brake on a said wheel axle set is operable to effect condition signal transmission characteristic of the brake location on the axle and receivable at a corresponding channel of the coupling reception means.

10. An arrangement as claimed in any one of the preceding claims in which the condition sensing apparatus (42, 52) has an operational part (44, 54) arranged to be disposed in or adjacent a said friction lining (32_{LI}) and a conductive path (45, 55) connecting the operational part to at least one conductor termination (46, 56) accessible from externally of the friction lining.

11. An arrangement as claimed in claim 10 in which the coupling transmission arrangement (62) includes a signal coupling member (63), having at least one coupling contact (64), arranged to extend into a coupling cavity (65) defined in the friction pad (30_{LI}) and/or holder (28_{LI}) and therein effect conductive abutment between a coupling contact and a said conductor termination (46, 56).

12. An arrangement as claimed in claim 11 in which the coupling transmission arrangement (62) is adapted to be supported by the friction pad (30_{LI}) and/or holder (28_{LI}) in the coupling cavity (65) by way of the signal coupling member (63).

13. An arrangement as claimed in any one of the preceding claims for a brake system in which the friction pad holder (28) is pivotable about at least one tilt axis (59₁ 59₂), in which arrangement the condition sensing apparatus (52) is disposed with respect to the pad with the operational part offset from at least one tilt axis.

14. A vehicle (10_{B}) having a plurality of braked wheel axle sets spaced apart in the direction of travel and a brake arrangement (20) including at least one friction lining (32_{LI}) and a holder (28_{LI}) therefor associated with at least one wheel axle set (12), at least one said brake arrangement having associated therewith a friction lining condition reporting arrangement (40) as claimed in any one of claims 1 to 13.

15. A method of determining, for a vehicle (10_{B}) having a plurality of braked wheel axle sets (12, 12') spaced apart in the direction of vehicle travel, existence, in at least one monitored brake (20₂) of each of a plurality of the axle sets, of at least one predetermined condition in a friction lining thereof, the method comprising
disposing in association with each monitored brake individually associated friction lining condition sensing apparatus (42, 52),
sensing the existence of a said predetermined condition in any friction lining by the associated apparatus,
coupling condition signals indicative of a sensed condition to processing (76) means remote from the monitored brakes, and
processing condition signals received by said processing means to report existence of the condition,
the method being **characterised by**
effecting coupling of the condition signals associated with any said monitored brake by wireless transmission from coupling transmission arrangements (62) associated individually with the monitored brake to complementary coupling reception means (78) connected to the processing means,
causing at least one part of the coupling reception means (78) and wheel axle sets (12, 12') to travel relative to each other in the direction of wheel axle set spacing and, for one wheel axle set at a time, selectively enabling coupling of condition signals from each coupling transmission arrangement (62) to the coupling reception means (78),
recording the positions of wheel axle sets from which transmission is selectively enabled with respect to a datum point of the vehicle (12_{A}), and
processing received condition signals to report the existence of a said brake friction lining condition and at least a wheel axle set with which the brake friction lining is associated.

16. A method as claimed in claim 15 comprising effecting coupling of coupling transmission arrangements associated with individual monitored brakes at all positions on the axles of said plurality of wheel axle sets by identical transmissions to common coupling reception means.

17. A method as claimed in any one of claim 15 or claim 16 comprising selectively enabling coupling of wireless transmissions to the coupling reception means (78) on the basis of instantaneous positional relationship between each said coupling transmission arrangement and said at least one part of the coupling reception means.

18. A method as claimed in any one of claims 15 to 17 comprising emitting selection energy receivable by the coupling transmission arrangement (62) from a selection source (82) forming a part of the coupling reception means (78) and selectively enabling the coupling transmission arrangement (62) by defining an emission and/or reception envelope (79') which excludes any coupling transmission arrangement not having an appropriate positional relationship with the selection source.

19. A method as claimed in any one of claims 15 to 17 comprising selectively enabling transmission by emitting selection energy, receivable by the coupling transmission arrangement (62), from a selection source (82) forming part of the coupling reception means (78) in accordance with an appropriate positional relationship between the selection source and the wheel axle set associated with the coupling transmission arrangement.

20. A method as claimed in any one of claims 15 to 19 comprising causing each selectively enabled condition transmission means to issue wireless transmissions visually and/or audibly recognisable.

21. A method of as claimed in any one of claims 15 to 20 comprising personally approaching the monitored brakes of a wheel axle set with a selection energy source and coupling reception means, transmitting selection energy thereto and receiving from a coupling transmission arrangement associated with individual monitored brakes of the axle set, condition signals indicative of existence of a said predetermined condition in a friction lining of any said individual brake, and if appropriate, confirmation signals indicative of absence of existence of a said predetermined condition.

22. A method as claimed in any one of claims 15 to 21 comprising recording the positions of wheel axle sets (12) by defining a vehicle datum point (12_{A}) at a part of the vehicle away from which the coupling reception means (78) travels relatively and counting the number of wheel axle sets passed in the travel.

23. A method as claimed in any one of claims 15 to 22 comprising processing received condition signals and recording the positions of wheel axle sets (12, 12') in pre-processing means (89) disposed on or in the vicinity of the vehicle (10_{B}), forwarding data resulting from pre-processing to identification means (90), storing in the identification means details of discrete sub-components (10_{T}, 10_{A}, 10_{B}, 10_{C}) of the vehicle having wheel axle sets and/or the sub-component positions relative to the predetermined vehicle datum point (12_{A}) and deriving from the identification signals and said stored details reporting signals including information identifying the vehicle sub-component in which a said predetermined condition of brake friction lining exists.

24. A method as claimed in any one of claims 15 to 22 comprising disposing the processing means (90) remotely of the vehicle, storing therein (93, 94) details of discrete sub-components (10_{T}, 10_{A}, 10_{B}, 10_{C}) of the vehicle having wheel axle sets (12) and/or the sub-component positions relative to the predetermined vehicle datum point (12_{A}), and deriving from the received condition signals, recorded positions of the wheel axle sets and said stored details reporting signals including information identifying the vehicle sub-component in which a said predetermined condition of brake friction lining exists.

25. A method as claimed in claim 23 or claim 24 comprising linking the processing means (76) to a vehicle maintenance scheduling arrangement (96) and in response to determination of existence of a said predetermined condition in a brake friction lining of a vehicle sub-component to enter a maintenance appointment for the vehicle component in the maintenance schedule.

## Patentansprüche

1. Für ein Radfahrzeug (10_{B}) mit einer Vielzahl von gebremsten Radachsensätzen (12,12'), die in der Fahrtrichtung voneinander beabstandet sind, und einer Bremse (20_{L}), die mindestens einen Reibbelag (32_{LI}) und einen Halter (28_{LI}) dafür einschließt, mindestens einem Radachsensatz zugeordnet, eine Zustandsmeldeanordnung (40) des Reibbelags, die betreibbar ist, zum Überwachen von mindestens einer Bremse und zum Melden des Vorhandenseins von mindestens einem vorherbestimmten Zustand in einem Reibbelag einer überwachten Bremse, umfassend eine Zustandserfassungsvorrichtung (42,52) des Reibbelags und Kopplungsmittel (60), die der Zustandserfassungsvorrichtung zugeordnet sind, die betreibbar sind, um Zustandssignale bereitzustellen, die für den Erfassungsstatus der Zustandserfassungsvorrichtung repräsentativ sind, an einen Signalprozessor (76), der von dem Reibbelag der Bremse entfernt ist, **dadurch gekennzeichnet, dass**
- das Kopplungsmittel (60) für jede überwachte Bremse eine einzeln zugeordnete Kopplungsübertragungsanordnung (62) umfasst, die angebracht ist, um mit der Bremse angeordnet zu werden, und betreibbar, um eine drahtlose Übertragung von Zustandssignalen zu bewirken,
- Kopplungsaufnahmemittel (78), die einen Empfänger (78') einschließen, der auf drahtlose Übertragungen von der Kopplungsübertragungsanordnung anspricht, und mindestens einen Teil (78') davon aufweist, der in Bezug auf die Radachsensätze beweglich ist und in einer geeigneten stellungsbezogenen Beziehung mit einem Radachsensatz zur Zeit angebracht werden kann, um selektiv einen Empfang der drahtlosen Übertragungen von der Kopplungsübertragungsanordnung (62) zu ermöglichen, die diesem Radachsensatz zugeordnet ist, und einen Prozessor, der auf Daten anspricht, die durch die Kopplungsaufnahmemittel bereitgestellt werden, und die den Empfang einer Übertragung anzeigen, um das Vorhandensein eines vorherbestimmten Zustandes in diesem betreffenden Radachsensatz zu melden.

2. Anordnung nach Anspruch 1, die eine Aufzeichnungsvorrichtung (78") einschließt, betreibbar, um für die geeignete stellungsbezogene Beziehung zwischen dem mindestens einen beweglichen Teil der Kopplungsaufnabmemittel (78) und jedes Radachsensatzes (12) die Stellung des Radachsensatzes in Beziehung auf einen Bezugspunkt (12_{A}) des Fahrzeugs aufzuzeichnen.

3. Anordnung nach Anspruch 2, wobei das mindestens eine bewegliche Teil (78') der Kopplungsaufnahmemittel (78) angebracht ist, um in geeigneter stellungsbezogener Beziehung mit mindestens jedem Radachsensatz (12) angeordnet zu werden, der wiederum eine überwachte Bremse aufweist, wobei die Aufzeichnungsvorrichtung (78") angeordnet ist, um die Stellung jedes Radachsensatzes in Bezug auf den Bezugspunkt (12_{A}) des Fahrzeugs aufzuzeichnen, und wobei der Prozessor auf einen Empfang eines Zustandssignals anspricht, um das Vorhandensein eines vorherbestimmten Zustands des Reibbelags der Bremse und die Stellung des Radachsensatzes (12), in welchem der Zustand vorhanden ist, in Beziehung auf den Bezugspunkt des Fahrzeugs zu identifizieren, durch Zuordnen des Zustandssignals zu einem Radachsensatz des Fahrzeugs.

4. Anordnung nach Anspruch 3, wobei das mindestens eine bewegliche Teil der Kopplungsmittel (78) angeordnet ist, um sich in Beziehung auf das Fahrzeug zu bewegen, und um wiederum eine geeignete stellungsbezogene Beziehung mit jedem Radachsensatz (12) des Fahrzeugs aufzuzeichnen.

5. Anordnung nach Anspruch 3 oder Anspruch 4 geeignet für ein Fahrzeug (10), umfassend eine Vielzahl von Radunterkomponenten (10_{T}, 10_{A}, 10_{B}, 10_{C}), die hintereinander angeordnet sind, wobei der Prozessor (76) Speichermittel (93) einschließt, um den Zustand des Fahrzeugs in Bezug auf Identitäten von Fahrzeugunterkomponenten zu speichern, und für jede Komponente die Anzahl von Radachsensätzen davon, wobei der Prozessor auf einen Empfang eines Zustandssignals und ein Aufzeichnen des relativen Durchgangs eines Radachsensatzes anspricht, um ein Meldesignal bereitzustellen, das das Vorhandensein eines vorherbestimmten Zustandes des Reibbelags der Bremse identifiziert und eine Fahrzeugunterkomponente identifiziert, in welcher der Zustand vorhanden ist.

6. Anordnung nach irgendeinem der Ansprüche 1 bis 5, wobei das mindestens eine bewegliche Teil den Empfänger (78') umfasst, angeordnet, um selektiv einen Empfang zu ermöglichen, indem in einer geeigneten Stellung eine Übertragungs- und/oder Empfangseinhüllende (79) festgelegt wird, welche die Kopplung von Übertragungen der Kopplungsübertragungsanordnung (62) ausschließt, die keine geeignete stellungsbezogene Beziehung dazu aufweisen.

7. Anordnung nach irgendeinem der Ansprüche 1 bis 6, wobei das mindestens eine bewegliche Teil einen Sender (82) von Auswahlenergie umfasst, die durch zugeordnete Empfangsmittel (86) von Auswahlenergieenergie empfangen werden kann, die an jeder Kopplungsübertragungsanordnung (62) angebracht sind, angeordnet, um selektiv einen Empfang von drahtlosen Übertragungen durch die Kopplungsübertragungsanordnung zu ermöglichen, indem in einer geeigneten Stellung in Bezug auf einen Radachsensatz eine Auswahlenergie-Sende- und/oder Empfangseinhüllende (79') mit einer Kopplungsübertragungsanordnung festgelegt wird, welche eine drahtlose Übertragung von einer Kopplungsübertragungsanordnung ausschließt, die keine geeignete stellungsbezogene Beziehung dazu aufweist.

8. Anordnung nach irgendeinem der vorhergehenden Ansprüche, wobei jede Kopplungsübertragungsanordnung (62) einen Zustandssender (72), eine Stromquelle (73) und Zustandssteuermittel (74) umfasst, die auf die Zustandserfassungsvorrichtung (52) ansprechen, um das Auftreten und/oder die Form von drahtlosen Übertragungen von dem Zustandssender zu steuern.

9. Anordnung nach irgendeinem der vorhergehenden Ansprüche, wobei das Kopplungsaufnahmemittel (78) eine Vielzahl von Empfangskanälen umfasst und die Kopplungsübertragungsanordnung (62), die jeder überwachten Bremse auf einem Radachsensatz zugeordnet ist, betreibbar ist, um eine Übertragung eines Zustandssignals zu bewirken, das für Bremsstellung auf der Achse charakteristisch ist, und an einem entsprechenden Kanal der Kopplungsaufnahmemittel empfangen werden kann.

10. Anordnung nach irgendeinem der vorhergehenden Ansprüche, wobei die Zustandserfassungsvorrichtung (42,52) ein betriebsbereites Teil (44,54), das angebracht ist, um in oder benachbart zu einem Reibbelag (32_{LI}) angebracht zu werden, und einen leitfähigen Pfad (45,55) aufweist, der das betriebsbereite Teil mit mindestens einem Leiterabschluss (46,56) verbindet, der von außerhalb des Reibbelags zugänglich ist.

11. Anordnung nach Anspruch 10, wobei die Kopplungsübertragungsanordnung (62) ein Signalkopplungselement (63) einschließt, mit mindestens einem Kopplungskontakt (64), der angeordnet ist, um sich in einen Kopplungshohlraum (65) zu erstrecken, der in dem Reibfeld (30_{LI}) und/oder Halter (28_{LI}) festgelegt ist, und darin ein leitendes Anliegen zwischen einem Kopplungskontakt und einem Leiterabschluss (46,56) bewirkt.

12. Anordnung nach Anspruch 11, wobei die Kopplungsübertragungsanordnung (62) angepasst ist, um durch das Reibfeld (30_{LI}) und/oder Halter (28_{LI}) in dem Kopplungshohlraum (65) durch das Signalkopplungselement (63) gehalten zu werden.

13. Anordnung nach irgendeinem der vorhergehenden Ansprüche für ein Bremssystem, wobei der Reibfeldhalter (28) um mindestens eine Kippachse (59₁ 59₂) schwenkbar ist, wobei in der Anordnung die Zustandserfassungsvorrichtung (52) in Bezug auf das Feld angebracht ist, wobei das betriebsbereite Teil von mindestens einer Kippachse versetzt ist.

14. Fahrzeug (10_{B}) mit einer Vielzahl von gebremsten Radachsensätzen, die in der Fahrtrichtung voneinander beabstandet sind, und eine Bremsanordnung (20), die mindestens einen Reibbelag (30_{LI}) und einen Halter (28_{LI}) dafür einschließt, der mindestens einem Radachsensatz (12) zugeordnet ist, wobei mindestens eine Bremsanordnung eine zugeordnete Zustandsmeldeanordnung (40) eines Reibbelags aufweist, wie in irgendeinem der Ansprüche 1 bis 13 beansprucht.

15. Verfahren, um für ein Fahrzeug (10_{B}) mit einer Vielzahl von gebremsten Radachsensätzen (12,12'), die in der Fahrtrichtung des Fahrzeugs voneinander beabstandet sind, in mindestens einer überwachten Bremse (20₂) von jeder einer Vielzahl der Achsensätze ein Vorhandensein von mindestens einem vorherbestimmten Zustand in einem Reibbelag davon zu bestimmen, wobei das Verfahren umfasst:
- Anordnen von einzeln zugeordneten Zustandserfassungsvorrichtungen (42,52) eines Reibbelags in Verbindung mit jeder überwachten Bremse,
- Erfassen des Vorhandenseins eines vorherbestimmten Zustands in irgendeinem Reibbelag mittels der zugeordneten Vorrichtung,
- Koppeln von Zustandssignalen, die einen erfassten Zustand angeben, mit Verarbeitungsmitteln (76), die von den überwachten Bremsen entfernt sind, und
- Verarbeiten von Zustandssignalen, die durch die Verarbeitungsmittel empfangen werden, um das Vorhandensein des Zustandes zu melden,
wobei das Verfahren **gekennzeichnet ist durch**:
- Bewirken eines Koppelns der Zustandssignale, die irgendeiner überwachten Bremse zugeordnet sind, **durch** drahtlose Übertragung von Kopplungsübertragungsvorrichtungen (62), die einzeln der überwachten Bremse zugeordnet sind, mit komplementären Kopplungsaufnahmemitteln (78), die mit dem Verarbeitungsmittel verbunden sind,
- Bewirken, dass sich mindestens ein Teil der Kopplungsaufnahmemittel (78) und der Radachsensätze (12,12") in Beziehung zueinander in der Richtung des Abstandes des Radachsensatzes bewegen, und
- für einen Radachsensatz jeweils selektives Ermöglichen eines Koppelns von Zustandssignalen von jeder Kopplungsübertragungsanordnung (62) mit den Kopplungsaufnahmemitteln (78),
- Aufzeichnen der Stellungen von Radachsensätzen, von welchen eine Übertragung in Bezug auf einen Bezugspunkt des Fahrzeugs (12_{A}) selektiv ermöglicht ist, und
- Verarbeiten von empfangenen Zustandssignalen, um das Vorhandensein eines Zustands des Reibbelags der Bremse und mindestens eines Radachsensatzes, dem der Reibbelag der Bremse zugeordnet ist, zu melden.

16. Verfahren nach Anspruch 15, umfassend ein Bewirken eines Koppelns von Kopplungsübertragungsvorrichtungen, die einzeln überwachten Bremsen zugeordnet sind, an allen Stellungen auf den Achsen der Vielzahl von Radachsensätzen durch identische Übertragungen an gemeinsame Kopplungsaufnahmemittel.

17. Verfahren nach irgendeinem der Ansprüche 15 oder 16, umfassend selektives Ermöglichen eines Koppelns von drahtlosen Übertragungen an die Kopplungsaufnahmemittel (78) basierend auf einer unmittelbaren stellungsbezogenen Beziehung zwischen jeder der Kopplungsübertragungsanordnung und dem mindestens einen Teil der Kopplungsaufnahmemittel.

18. Verfahren nach irgendeinem der Ansprüche 15 bis 17, umfassend ein Ausstrahlen von Auswahlenergie, die von der Kopplungsübertragungsanordnung (62) empfangen werden kann, von einer Auswahlquelle (82), die einen Teil der Kopplungsaufnahmemittel (78) bildet und selektiv die Kopplungsübertragungsanordnung (62) durch ein Bestimmen einer Sende- und/oder Empfangseinhüllende (79') aktiviert, welche irgendeine Kopplungsübertragungsanordnung ausschließt, die keine stellungsbezogene Beziehung zu der Auswahlquelle aufweist.

19. Verfahren nach irgendeinem der Ansprüche 15 bis 17, umfassend ein selektives Ermöglichen einer Übertragung durch Ausstrahlen von Auswahlenergie, die durch die Kopplungsübertragungsanordnung (62) empfangen werden kann, von einer Auswahlquelle (82), die einen Teil der Kopplungsaufnahmemittel (78) bildet, gemäß einer stellungsbezogenen Beziehung zwischen der Auswahlquelle und dem Radachsensatz, der der Kopplungsübertragungsanordnung zugeordnet ist.

20. Verfahren nach irgendeinem der Ansprüche 15 bis 19, umfassend ein Bewirken, dass jedes selektiv aktivierte Zustandsübertragungsmittel drahtlose Übertragungen ausgibt, die visuell und/oder hörbar erkennbar sind.

21. Verfahren nach irgendeinem der Ansprüche 15 bis 20, umfassend ein persönliches Annähern an die überwachten Bremsen eines Radachsensatzes mit einer Auswahlenergiequelle und Kopplungsaufnahmemitteln, Übertragen der Auswahlenergie dahin, und Empfangen von Zustandssignalen, die das Vorhandensein eines vorherbestimmten Zustands in einem Reibbelag irgendeiner einzelnen Bremse anzeigen, und gegebenenfalls von Bestätigungssignalen, die das Fehlen eines Vorhandenseins eines vorherbestimmten Zustandes anzeigen, von einer Kopplungsübertragungsanordnung, die einzelnen überwachten Bremsen des Achsensatzes zugeordnet ist.

22. Verfahren nach irgendeinem der Ansprüche 15 bis 21, umfassend ein Aufzeichnen der Stellungen von Radachsensätzen (12) durch Festlegen eines Bezugspunktes (12_{A}) eines Fahrzeugs in einem Teil des Fahrzeuges, von dem entfernt sich die Kopplungsaufnahmemittel (78) relativ bewegen, und Zählen der Anzahl der Radachsensätzen, die in der Bewegung durchquert werden.

23. Verfahren nach irgendeinem der Ansprüche 15 bis 22, umfassend ein Verarbeiten von empfangenen Zustandssignalen und Aufzeichnen der Stellungen der Radachsensätze (12,12') in Vorverarbeitungsmitteln (89), die auf oder in der Umgebung des Fahrzeugs (10_{B}) angeordnet sind, Weiterleiten von Daten, die aus dem Vorverarbeiten hervorgehen, an Erkennungsmittel (90), Speichern in den Erkennungsmitteln von Details von einzelnen Unterkomponenten (10_{T}, 10_{A}, 10_{B},10_{C}) des Fahrzeugs mit Radachsensätzen und/oder der Stellungen der Unterkomponenten in Beziehung auf den vorherbestimmten Bezugspunkt (12_{A}) des Fahrzeugs und anhand der Erkennungssignale und der gespeicherten Details Gewinnen von Meldesignalen, die Information einschließen, die die Fahrzeugunterkomponente anzeigt, in welcher ein vorherbestimmter Zustand des Reibbelags der Bremse vorliegt.

24. Verfahren nach irgendeinem der Ansprüche 15 bis 22, umfassend ein Anordnen der Verarbeitungsmittel (90) entfernt von dem Fahrzeug, Speichern darin (93,94) von Details von einzelnen Unterkomponenten (10_{T}, 10_{A}, 10_{B}, 10_{C}) des Fahrzeugs mit Radachsensätzen (12) und/oder der Stellungen der Unterkomponenten in Beziehung zu dem vorherbestimmten Bezugspunkt (12_{A}) des Fahrzeugs, und anhand der empfangenen Zustandssignale der aufgezeichneten Stellungen der Radachsensätze, und den gespeicherten Details Gewinnen von Meldesignalen, die Information einschließen, die die Fahrzeugunterkomponente anzeigt, in welcher ein vorherbestimmter Zustand des Reibbelags der Bremse vorliegt.

25. Verfahren nach irgendeinem der Ansprüche 23 oder 24, umfassend ein Verbinden der Verarbeitungsmittel (76) mit einer Planungsanordnung (96) für Fahrzeugwartung und in Reaktion auf ein Bestimmen des Vorhandenseins eines vorherbestimmten Zustands in einem Reibbelag einer Bremse einer Fahrzeugunterkomponente, zum Eingeben eines Wartungstermins für die Fahrzeugkomponente in den Wartungsplan.

## Revendications

1. Agencement de signalisation d'état de garniture de friction (40), destiné à un véhicule à roues (10_{B}) ayant une pluralité d'ensembles d'essieux de roues dotées de freins (12, 12') espacés dans la direction du déplacement et un frein (20_{L}) comprenant au moins une garniture de friction (32_{LI}) et un support (28_{LI}) associé à au moins un ensemble d'essieu de roues, l'agencement pouvant être mis en oeuvre pour surveiller au moins un frein et signaler l'existence d'au moins un état prédéterminé d'une garniture de friction dudit frein surveillé, comprenant un dispositif de détection d'état de garniture de friction (42, 52) et un moyen de couplage (60) associé au dispositif de détection d'état pouvant être mis en oeuvre pour fournir des signaux d'état, représentatifs de l'état de détection du dispositif de détection d'état à un processeur de signal (76) à distance de la garniture de friction de frein, **caractérisé en ce que** :
le moyen de couplage (60) comprend, pour chaque frein surveillé et chaque agencement de transmission de couplage associé individuellement (62) agencé pour être disposé avec le frein et pour pouvoir être actionné afin d'effectuer une transmission sans fil de signaux d'état, un moyen de réception de couplage (78), comprenant un récepteur (78') répondant aux transmissions sans fil provenant dudit agencement de transmission de couplage, ayant au moins une partie de celui-ci (78') mobile par rapport aux ensembles d'essieux de roues et pouvant être disposé dans une relation de position appropriée avec un ensemble d'essieu de roues à la fois afin de valider sélectivement la réception desdites transmissions sans fil depuis l'agencement de transmission de couplage (62) associé à cet ensemble d'essieu de roues, et un processeur répondant aux données fournies par le moyen de réception de couplage et indiquant une réception de ladite transmission afin de signaler l'existence d'un dit état prédéterminé dans ledit ensemble d'essieu de roues particulier.

2. Agencement selon la revendication 1, comprenant un dispositif d'enregistrement (78") pouvant être mis en oeuvre pour enregistrer, pour la relation de position appropriée entre ladite au moins une partie mobile du moyen de réception de couplage (78) et chaque ensemble d'essieu de roues (12), la position de l'ensemble d'essieu de roues par rapport à un point de référence (12_{A}) du véhicule.

3. Agencement selon la revendication 2, dans lequel ladite au moins une partie mobile (78') du moyen de réception de couplage (78) est agencée pour être disposée dans la relation de position appropriée avec au moins chaque ensemble d'essieu de roues (12) ayant un frein à surveiller tour à tour, le dispositif d'enregistrement (78 ") est agencé pour enregistrer la position de chaque ensemble d'essieu de roues par rapport au point de référence du véhicule (12_{A}), et le processeur répond à la réception d'un signal d'état pour identifier, grâce à une association dudit signal d'état audit ensemble d'essieu de roues du véhicule, l'existence dudit état de garniture de friction de frein prédéterminé et la position de l'ensemble d'essieu de roues (12) à laquelle existe l'état par rapport au point de référence du véhicule.

4. Agencement selon la revendication 3, dans lequel ladite au moins une partie mobile du moyen de réception de couplage (78) est agencée pour se déplacer par rapport au véhicule et enregistrer une relation de position appropriée avec chaque ensemble d'essieu de roues (12) de véhicule tour à tour.

5. Agencement selon la revendication 3 ou la revendication 4, convenant pour un véhicule (10) comprenant une pluralité de sous-composants munis de roues (20_{T}, 10_{A}, 10_{B}, 10_{C}) disposés en tandem, dans lequel le processeur (76) comprend un moyen de mémorisation (93) pour mémoriser la constitution du véhicule en termes d'identités de sous-composants du véhicule et, pour chaque composant, le nombre d'ensembles d'essieux de roues de celui-ci, le processeur répondant à la réception d'un signal d'état et à l'enregistrement d'un passage relatif d'un ensemble d'essieu de roues pour fournir un signal de signalisation identifiant l'existence dudit état de garniture de friction de frein prédéterminé et l'identité d'un sous-composant du véhicule dans lequel existe l'état.

6. Agencement selon l'une quelconque des revendications 1 à 5, dans lequel ladite au moins une partie mobile comprend le récepteur (78') agencé pour valider sélectivement une réception en définissant, dans une position appropriée, une enveloppe de transmission et/ou de réception (79) qui exclut le couplage de transmissions provenant d'un agencement de transmission de couplage (62) n'ayant pas une relation de position appropriée avec celui-ci.

7. Agencement selon l'une quelconque des revendications 1 à 6, dans lequel ladite au moins une partie mobile comprend un émetteur d'énergie de sélection (82) pouvant être reçue par un moyen de réception d'énergie de sélection associé (86) disposé au niveau de chaque agencement de transmission de couplage (62) agencé pour valider sélectivement la réception de transmissions sans fil par l'agencement de transmission de couplage en définissant, dans une position appropriée par rapport à un ensemble d'essieu de roues, une enveloppe d'émission et/ou de réception d'énergie de sélection (79') avec un agencement de transmission de couplage qui exclut une transmission sans fil depuis un agencement de transmission de couplage ne présentant pas avec lui une relation de position appropriée.

8. Agencement selon l'une quelconque des revendications précédentes, dans lequel chaque agencement de transmission de couplage (62) comprend un émetteur d'état (72), une source d'alimentation (73) et un moyen de commande d'état (74) répondant au dispositif de détection d'état (52) pour commander l'apparition et/ou la forme de transmissions sans fil provenant de l'émetteur d'état.

9. Agencement selon l'une quelconque des revendications précédentes, dans lequel le moyen de réception de couplage (78) comprend une pluralité de canaux de réception, et l'agencement de transmission de couplage (62) associé à un frein surveillé quelconque sur ledit ensemble d'essieu de roues peut être mis en oeuvre pour activer la caractéristique de transmission de signal d'état de l'emplacement du frein sur l'essieu et pouvant être reçu sur un canal correspondant du moyen de réception de couplage.

10. Agencement selon l'une quelconque des revendications précédentes, dans lequel le dispositif de détection d'état (42, 52) comporte une partie fonctionnelle (44, 54) agencée pour être disposée dans ladite garniture de friction (32_{LI}) ou de manière adjacente à celle-ci, et une ligne de conduction (44, 55) reliant la partie fonctionnelle à au moins une terminaison de conducteur (46, 56) accessible depuis l'extérieur de la garniture de friction.

11. Agencement selon la revendication 10, dans lequel l'agencement de transmission de couplage (62) comprend un élément de couplage de signal (63) comportant au moins un contact de couplage (64) agencé pour s'étendre jusque dans une cavité de couplage (65) définie dans la plaquette de friction (30_{LI}) et/ou le support (28_{LI}) et y provoquer une rencontre conductrice entre un contact de couplage et ladite terminaison de conducteur (46, 56).

12. Agencement selon la revendication 11, dans lequel l'agencement de transmission de couplage (62) est conçu pour être supporté par la plaquette de friction (30_{LI}) et/ou le support (28_{LI}) dans la cavité de couplage (65) au moyen de l'élément de couplage de signal (63).

13. Agencement selon l'une quelconque des revendications précédentes, destiné à un système de frein dans lequel le support de plaquette de friction (28) peut pivoter autour d'au moins un axe d'inclinaison (59₁, 59₂), agencement dans lequel le dispositif de détection d'état (52) est disposé par rapport à la plaquette, la partie fonctionnelle étant décalée d'au moins un axe d'inclinaison.

14. Véhicule (10_{B}) comportant une pluralité d'ensembles d'essieux de roues munies de freins espacés dans la direction du déplacement et un agencement de frein (20) comprenant au moins une garniture de friction (32_{LI}) et un support (28_{LI}) qui lui est destiné, associé à au moins un ensemble d'essieu de roues (12), au moins un dit agencement de frein comportant, associé à celui-ci, un agencement de signalisation d'état de garniture de friction (40) selon l'une quelconque des revendications 1 à 13.

15. Procédé de détermination, pour un véhicule (10_{B}) comportant une pluralité d'ensembles d'essieux de roues munies de freins (12, 12') espacés dans la direction du déplacement du véhicule, de l'existence, dans au moins un frein surveillé (20₂) de chaque ensemble d'une pluralité des ensembles d'essieux, d'au moins un état prédéterminé dans une garniture de friction de celui-ci, le procédé comprenant :
la mise en place, en association avec chaque frein surveillé individuellement, d'un dispositif de détection d'état de garniture de friction associé (42, 52),
la détection de l'existence dudit état prédéterminé dans une garniture de friction quelconque grâce au dispositif associé,
le couplage des signaux d'état indicatifs d'un état détecté, à un moyen de traitement (76) éloigné des freins surveillés, et
le traitement d'état des signaux reçus par ledit moyen de traitement pour signaler l'existence de l'état,
le procédé étant **caractérisé par**
l'activation d'un couplage des signaux d'état associés à un frein surveillé quelconque grâce à la transmission sans fil depuis des agencements de transmission de couplage (62) associés individuellement au frein surveillé vers le moyen de réception de couplage complémentaire (70) relié au moyen de traitement,
le fait d'amener au moins une partie du moyen de réception de couplage (78) et des ensembles d'essieux de roues (12, 12') à se déplacer les uns par rapport aux autres dans la direction de l'espacement de l'ensemble d'essieu de roues et, pour un ensemble d'essieu de roues à la fois, valider de manière sélective le couplage de signaux d'état provenant de chaque agencement de transmission de couplage (62) au moyen de réception de couplage (78),
l'enregistrement des positions d'ensembles d'essieux de roues à partir desquels une transmission est validée de manière sélective par rapport à un point de référence du véhicule (12_{A}), et
le traitement des signaux d'état reçus pour signaler l'existence d'un dit état de garniture de friction de frein, et au moins un ensemble d'essieu de roues auquel la garniture de friction de frein est associée.

16. Procédé selon la revendication 15, comprenant le fait d'actionner un couplage d'agencements de transmission de couplage associés aux freins surveillés individuels à toutes les positions sur les essieux de ladite pluralité d'ensembles d'essieux de roues grâce à des transmissions identiques vers un moyen de réception de couplage commun.

17. Procédé selon l'une quelconque de la revendication 15 ou de la revendication 16, comprenant le fait de permettre sélectivement le couplage de transmissions sans fil au moyen de réception de couplage (78) sur la base d'une relation de position instantanée entre chaque dit agencement de transmission de couplage et ladite au moins une partie du moyen de réception de couplage.

18. Procédé selon l'une quelconque des revendications 15 à 17 comprenant le fait d'émettre une énergie de sélection pouvant être reçue par l'agencement de transmission de couplage (62) depuis une source de sélection (82) faisant partie du moyen de réception de couplage (78) et le fait de valider de manière sélective l'agencement de transmission de couplage (62) en définissant une enveloppe d'émission et/ou de réception (79') qui exclut un agencement de transmission de couplage ne présentant pas une relation de position appropriée avec la source de sélection.

19. Procédé selon l'une quelconque des revendications 15 à 17, comprenant le fait de valider de manière sélective une transmission en émettant une énergie de sélection, pouvant être reçue par l'agencement de transmission de couplage (62), depuis une source de sélection (82) faisant partie du moyen de réception de couplage (78) conformément à une relation de position appropriée entre la source de sélection et l'ensemble d'essieu de roues associé audit agencement de transmission de couplage.

20. Procédé selon l'une quelconque des revendications 15 à 19, comprenant le fait d'amener chaque moyen de transmission d'état validé de manière sélective à émettre des transmissions sans fil pouvant être reconnues visuellement et/ou de manière auditive.

21. Procédé selon l'une quelconque des revendications 15 à 20, comprenant le fait de rapprocher individuellement les freins surveillés d'un ensemble d'essieu de roues avec une source d'énergie de sélection et de coupler le moyen de réception, de lui transmettre l'énergie de sélection et de recevoir d'un agencement de transmission de couplage associé aux freins surveillés individuels de l'ensemble d'essieu, des signaux d'état indicatifs de l'existence d'un dit état prédéterminé dans une garniture de friction de l'un quelconque desdits freins individuels, et si cela convient, des signaux de confirmation indicatifs de l'absence ou de l'existence d'un dit état prédéterminé.

22. Procédé selon l'une quelconque des revendications 15 à 21, comprenant l'enregistrement des positions des ensembles d'essieux de roues (12) en définissant un point de référence de véhicule (12_{A}) au niveau d'une partie du véhicule dont le moyen de réception de couplage (78) s'éloigne relativement et en comptant le nombre des ensembles d'essieux de roues passés au cours du déplacement.

23. Procédé selon l'une quelconque des revendications 15 à 22, comprenant le traitement de signaux d'état reçus et l'enregistrement des positions d'ensembles d'essieux de roues (12, 12') dans le moyen de prétraitement (89) disposé sur le véhicule (10_{B}) ou au voisinage de celui-ci, la retransmission des données résultant du prétraitement au moyen d'identification (90), la mémorisation dans le moyen d'identification de détails de sous-composants séparés (10_{T}, 10_{A}, 10_{B}, 10_{C}) du véhicule comportant des ensembles d'essieux de roues et/ou des positions de sous-composants par rapport au point de référence de véhicule prédéterminé (12_{A}) et l'obtention, à partir des signaux d'identification et desdits détails mémorisés, de signaux de signalisation comprenant des informations identifiant le sous-composant du véhicule dans lequel existe un dit état prédéterminé de garniture de friction de frein.

24. Procédé selon l'une quelconque des revendications 15 à 22, comprenant la mise en place du moyen de traitement (90) à l'écart du véhicule, le fait d'y mémoriser (93, 94) des détails de sous-composants séparés (10_{T}, 10_{A}, 10_{B}, 10_{C}) du véhicule comportant des ensembles d'essieux de roues (12) et/ou des positions de sous-composants relatives au point de référence de véhicule prédéterminé (12_{A}) et l'obtention d'après les signaux d'état reçus, de positions enregistrées des ensembles d'essieux de roues et desdits signaux de signalisation de détails mémorisés comprenant des informations identifiant le sous-composant du véhicule dans lequel un dit état prédéterminé de garniture de friction de frein existe.

25. Procédé selon la revendication 23 ou la revendication 24, comprenant le fait de relier le moyen de traitement (76) à un agencement de planification d'entretien de véhicule (96) et, en réponse à la détermination de l'existence dudit état prédéterminé d'une garniture de friction de frein d'un sous-composant de véhicule, prévoir un rendez-vous d'entretien pour le composant du véhicule dans la planification de l'entretien.
